(19) Europäisches Patentamt
European Patent Office
Office européen des brevets

(11) **EP 3 168 821 A1**

(12) **EUROPEAN PATENT APPLICATION**
published in accordance with Art. 153(4) EPC

(43) Date of publication:
**17.05.2017 Bulletin 2017/20**

(51) Int Cl.:
***G08B 21/18*** (2006.01)

(21) Application number: **14897370.4**

(22) Date of filing: **07.07.2014**

(86) International application number:
**PCT/JP2014/068096**

(87) International publication number:
**WO 2016/006028 (14.01.2016 Gazette 2016/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fujitsu Limited**
**Kawasaki-shi, Kanagawa 211-8588 (JP)**

(72) Inventors:
• HARADA, Noriyuki
**Kawasaki-shi**
**Kanagawa 211-8588 (JP)**
• GOTOU, Mamoru
**Kawasaki-shi**
**Kanagawa 211-8588 (JP)**

• MITSUYAMA, Youko
**Kawasaki-shi**
**Kanagawa 211-8588 (JP)**
• MIZUGUCHI, Ryo
**Kawasaki-shi**
**Kanagawa 211-8588 (JP)**
• MIYASHIRO, Kazuhiro
**Kawasaki-shi**
**Kanagawa 211-8588 (JP)**

(74) Representative: **Ward, Gregory Peter**
**Haseltine Lake LLP**
**Lincoln House**
**300 High Holborn**
**London WC1V 7JH (GB)**

(54) **MOVEMENT DETECTION METHOD, MOVEMENT DETECTION PROGRAM AND TERMINAL DEVICE**

(57)    A motion detection method, a motion detection program, and a terminal device enabling detection of a tremble probably related to the health condition are provided. The motion detection method includes executing, with a computer (200), acquiring number of steps and a trembling number based on detection values of an acceleration sensor (14), and a time period in which the number of steps and the trembling number are detected, from a terminal device (100). The motion detection method also includes executing, with the computer (200), determining whether the trembling number occurring in a time period with the number of steps of a predetermined number or less exceeds a threshold, out of a time period with the number of steps exceeding the predetermined number, and the time period with the number of steps of the predetermined number or less. The motion detection method also includes executing, with the computer (200), generating information based on the trembling number when the trembling number exceeds the threshold as a result of the determining, and notifying the terminal device (100) of the generated information.

EP 3 168 821 A1

# FIG.1

**DETECTION DEVICE** `10`

- ACCEL-ERATION SENSOR `14`

**CONTROLLER** `15`
- ACQUISI-TION UNIT `16`
- ANA-LYZER `17`

**STORAGE UNIT** `12`
- ANALYSIS RESULT STORAGE UNIT `13`

COMMUNI-CATION UNIT `11`

**TERMINAL DEVICE** `100`

DISPLAY OPERA-TION UNIT `112`

**CONTROLLER** `130`
- ACQUISI-TION UNIT `131`
- NOTIFICA-TION UNIT `132`

SECOND COMMUNI-CATION UNIT `111`

FIRST COMMUNI-CATION UNIT `110`

STORAGE UNIT `120`

`1`

`N`

**SERVER DEVICE** `200`

COMMUNI-CATION UNIT `210`

**CONTROLLER** `230`
- ACQUISI-TION UNIT `231`
- DETERMI-NATION UNIT `232`
- GENERA-TOR `233`
- NOTIFICA-TION UNIT `234`
- CALCULA-TOR `235`

**STORAGE UNIT** `220`
- ACCUMU-LATION STORAGE UNIT `221`
- FORMULA STORAGE UNIT `222`

**Description**

[Technical Field]

The present invention relates to a motion detection method, a motion detection program, and a terminal device.

[Background Art]

In the case of keeping a pet such as a dog, there is a demand of recognizing the condition of the pet when the owner is away from home. A technique has been presented to recognize the condition of the pet, in which a detection device including an acceleration sensor is attached to the pet to detect the motion of the pet, and the condition of the pet is estimated based on the detected motion. In addition, another technique has been presented, in which a drawing illustrating the condition of the pet is displayed to the user who keeps the pet, to cause the user to visually clearly recognize the condition of the pet.

[Citation List]

[Patent Citation]

Patent Document 1: Japanese Laid-open Patent Publication No. 2013-77113
Patent Document 2: Japanese Laid-open Patent Publication No. 2010-68268

[Summary of Invention]

[Technical Problem]

However, because the acceleration sensor of the detection device enables detection of walking of the pet and "trembling" movement of the pet from a series of pieces of acceleration data, when the owner wishes to recognize the health condition as the condition of the pet, the number of times of "trembling" (hereinafter referred as "trembling number") may be extracted. The trembling number may serve as the index indicating the health condition, such as when the pet has an external wound or has a high fever, and the trembling number may depends on external causes such as excitement or stress due to meeting with another dog during a walk, for example, in the case where the pet is a dog. For this reason, simply observing increase in trembling number per unit time may cause difficulty in determining whether the increase in trembling number is increase in trembling number that is probably related to the health condition.

According to an aspect, the present invention provides a motion detection method, a motion detection program, and a terminal device that enable detection of a tremble probably related to the health condition.

[Solution to Problem]

According to one aspect, a motion detection method includes executing, with a computer, acquiring, from a terminal device, number of steps and a trembling number based on detection values of an acceleration sensor, and a time period in which the number of steps and the trembling number are detected. The motion detection method also includes executing, with the computer, determining whether the trembling number occurring in a time period with the number of steps of a predetermined number or less exceeds a threshold, out of a time period with the number of steps exceeding the predetermined number, and the time period with the number of steps of the predetermined number or less. The motion detection method also includes executing, with the computer, generating information based on the trembling number when the trembling number exceeds the threshold as a result of the determining, and notifying the terminal device of the generated information.

[Advantageous Effects of Invention]

The present invention enables detection of a tremble probably related to the health condition.

[Brief Description of Drawings]

FIG. 1 is a block diagram illustrating an example of configuration of a motion detection system of a first embodiment.

FIG. 2 is a diagram illustrating an example of an analysis result storage unit.

FIG. 3 is a diagram illustrating an example of a display picture of a terminal device.

FIG. 4 is a diagram illustrating another example of the display picture of the terminal device.

FIG. 5 is a diagram illustrating another example of the display picture of the terminal device.

FIG. 6 is a diagram illustrating an example of a regression line.

FIG. 7 is a diagram illustrating another example of the regression line.

FIG. 8 is a sequence diagram illustrating an example of operations of the motion detection system of the first embodiment.

FIG. 9 is a flowchart illustrating an example of analysis processing.

FIG. 10 is a block diagram illustrating an example of configuration of a motion detection system of a second embodiment.

FIG. 11 is a diagram illustrating another example of the analysis result storage unit.

FIG. 12 is a sequence diagram illustrating an example of operations of the motion detection system of the second embodiment.

FIG. 13 is a block diagram illustrating an example of configuration of a motion detection system of a third embodiment.

FIG. 14 is a diagram illustrating another example of the analysis result storage unit.

FIG. 15 is a sequence diagram illustrating an example of operations of the motion detection system of the third embodiment.

FIG. 16 is a block diagram illustrating an example of configuration of a motion detection system of a fourth embodiment.

FIG. 17 is a sequence diagram illustrating an example of operations of the motion detection system of the fourth embodiment.

FIG. 18 is a diagram illustrating an example of hardware configuration of a detection device.

FIG. 19 is a diagram illustrating an example of hardware configuration of the terminal device.

FIG. 20 is a diagram illustrating an example of a computer executing a motion detection program.

[Embodiments for Carrying Out the Invention]

The following is detailed explanation of embodiments of a motion detection method, a motion detection program, and a terminal device disclosed by the present application. The disclosed technique is not limited by the embodiments. The following embodiments may be properly combined within a range in which the embodiments are not contradictory to each other.

First Embodiment

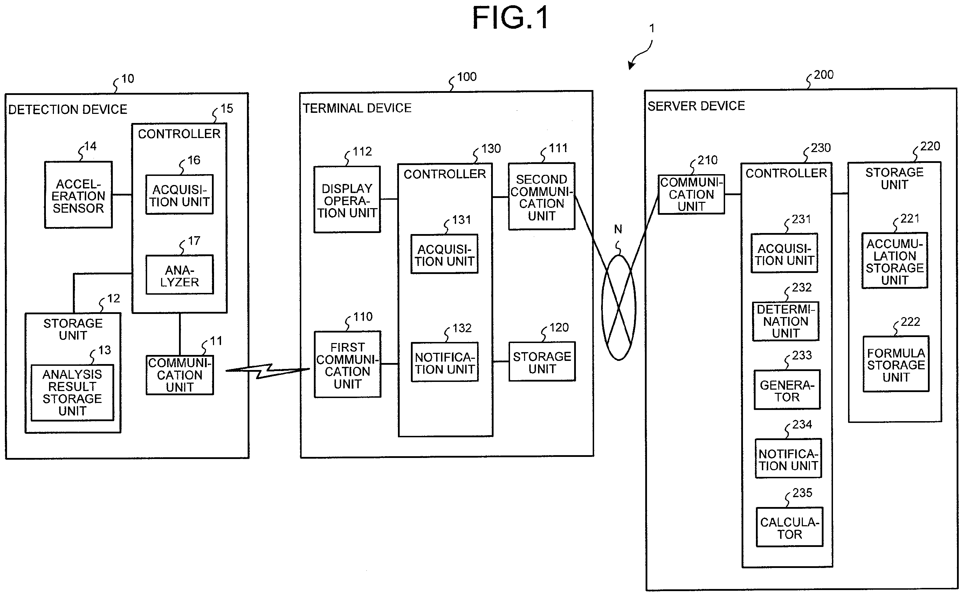

FIG. 1 is a block diagram illustrating an example of configuration of a motion detection system of a first embodiment. The motion detection system 1 illustrated in FIG. 1 includes a detection device 10, a terminal device 100, and a server device 200. FIG. 1 illustrates the case where the system includes one detection device 10 and one terminal device 100, but the number of detection device 10 and the number of terminal device 100 are not limited. The motion detection system 1 may include a desired number of detection devices 10 and terminal devices 100.

The terminal device 100 and the server device 200 are connected with each other to perform mutual communication via a network N. As the network N, a wired or wireless communication network of any type may be adopted, such as the Internet, a local area network (LAN), and a virtual private network (VPN). The detection device 10 and the terminal device 100 are connected with each other to perform mutual communication with a near field communication standard such as Bluetooth (registered trademark).

In the motion detection system 1, for example, the terminal device 100 receives the number of steps of the dog and the trembling number serving as the number of times of "trembling" of the dog, which are detected with the detecting device 10 attached to a collar of the dog, and transmits them to the server device 200, to determine whether the trembling number is larger than a threshold. The motion detection system 1 performs determination of the trembling number probably related to the health condition, by determining the trembling number in a state in which the number of steps is small. When the trembling number is larger than the threshold, the motion detection system 1 notifies the terminal device 100 of information that the trembling number becomes larger than usual, and causes the terminal device 100 to display the information, to alert the terminal device 100's user as the owner of the dog to the health condition of the dog.

The following is explanation of the configuration of the detection device 10. As illustrated in FIG. 1, the detection device 10 includes a communication unit 11, a storage unit 12, an acceleration sensor 14, and a controller 15. In addition to the functional units illustrated in FIG. 1, the detection device 10 may include various functional units included in a known computer, such as a display indicating a movement condition, a sound output device, and an input device.

The communication unit 11 is achieved with, for example, a Bluetooth (registered trademark) module, a FeliCa (registered trademark) module, a wireless universal serial bus (WUSB) module, or a near field communication (NFC) module. A wireless LAN module may be used as the communication unit 11. The communication unit 11 serves as a communication interface that is connected with the terminal device 100 in a wireless manner, and manages information communications with the terminal device 100.

When setting information of communication with the terminal device 100 is input from the controller 15 to the communication unit 11, the communication unit 11 performs setting thereof in accordance with the setting information. When the communication unit 11 receives a connection request from the terminal device 100, the communication unit 11 outputs the received connection request to the controller 15. When the communication unit 11 receives the number of steps, the trembling number, and the time period from the controller 15, the communication unit 11 transmits the input number of steps, trembling number, and time period to the terminal device 100.

The storage unit 12 is achieved with, for example, a storage device such as a semiconductor memory element such as a random access memory (RAM), and a flash memory. The storage unit 12 includes an analysis result storage unit 13. The storage unit 12 stores information used for processing performed in the controller 15.

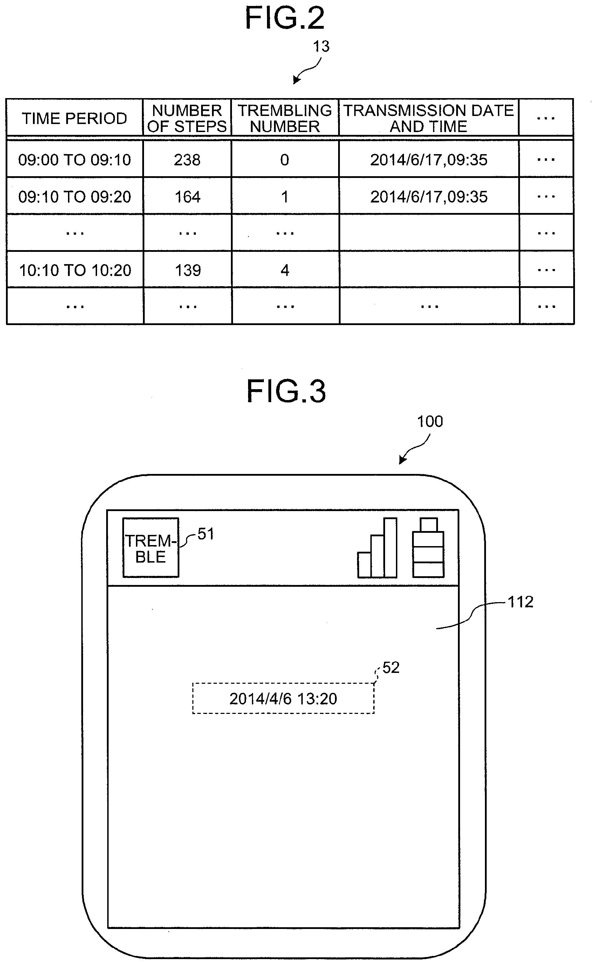

The analysis result storage unit 13 stores the number of steps and the trembling number based on the detection values of the acceleration sensor 14, in association with the time period in which the number of steps and the trembling number are detected. FIG. 2 is a diagram illustrating an example of the analysis result storage unit. As illustrated in FIG. 2, the analysis result storage unit 13 includes items such as "time period", "number of steps", "trembling number", and "transmission date and time". One record for each of predetermined time periods is generated in the analysis result storage unit 13.

The item "time period" indicates a time period for which the detection values of the acceleration sensor 14 are analyzed. For example, one time period can be set to 10 minutes. The example of FIG. 2 illustrates only the time for convenience' sake, but the year, the month, and the day may be stored together. Each time period is not limited to 10 minutes, but may be any other time. The item "number of steps" indicates the number of steps calculated for each of the time periods by analyzing the detection values of the acceleration sensor 14 in an analyzer 17 of the controller 15 described later. The item "trembling number" indicates the trembling number calculated for each of the time periods by analyzing the detection values of the acceleration sensor 14 in the analyzer 17 of the controller 15 described later. The item "transmission date and time" indicates the date and time at which the number of steps, the trembling number, and the time period of the record were transmitted to the terminal device 100. The transmission date and time is blank when the number of steps, the trembling number, and the time period of the record have not yet been transmitted to the terminal device 100.

FIG. 1 will be explained hereinafter again. The acceleration sensor 14 is, for example, a triaxial acceleration sensor detecting acceleration of each of axial directions of x, y, and z axes. The acceleration sensor 14 detects acceleration of each axis, to detect acceleration applied on the detection device 10. For example, the acceleration sensor 14 may be an acceleration sensor using micro electro mechanical systems (MEMS) of a capacitance type, a piezo-resistance type, or a gas temperature distribution type. The acceleration sensor 14 detects acceleration for, for example, each 15.625 ms, and outputs the detected acceleration as the detection value to the controller 15. The acceleration detection frequency for 15.625 ms is equal to 64 times per second. This frequency is used for detecting the number of steps of small dogs, and may be properly changed according to the target animal.

The controller 15 is achieved by, for example, executing a program stored in an internal storage device with a central processing unit (CPU) or a micro processing unit (MPU), with the RAM used as a work area. The controller 15 may be achieved with an integrated circuit such as an application specific integrated circuit (ASIC) and a field programmable gate array (FPGA). The controller 15 includes an acquisition unit 16 and the analyzer 17, and achieves or executes information processing functions and operations explained hereinafter. The internal configuration of the controller 15 is not limited to the configuration illustrated in FIG. 1, but may be another configuration as long as it is configuration to perform the information processing described later.

The controller 15 also performs setting to communicate with the terminal device 100 on the communication unit 11. The controller 15 outputs setting information of communication with the terminal device 100 to the communication unit 11. In addition, when the controller 15 receives a connection request from the terminal device 100 through the communication unit 11, the controller 15 reads untransmitted number of steps, trembling number, and time period from the analysis result storage unit 13, and transmits them to the terminal device 100 via the communication unit 11. When no untransmitted number of steps, trembling number, or time period exists in the analysis result storage unit 13, the controller 15 may transmit the information that no untransmitted number of steps, trembling number, or time period exists in the analysis result storage unit 13 to the terminal device 100, or transmit the newest ones among the transmitted number of steps, trembling number, and time period to the terminal device 100. The controller 15 may also transmit additional information related to the number of steps before and after the trembling detection, in addition to the number of steps, the trembling number, and the time period to be transmitted to the terminal device 100.

The acquisition unit 16 starts acquisition of detection values from the acceleration sensor 14, when the acquisition unit 16 is instructed, with a switch (not illustrated) or the like, to acquire detection values of the acceleration sensor 14. The acquisition switch 16 determines whether detection values for a predetermined time, for example, 10 minutes, have been acquired. When detection values for the predetermined time have not been acquired, specifically, the acquisition period of detection values does not reach the predetermined time, the acquisition unit 16 continues acquisition of detection values. When detection values for the predetermined time have been acquired, the acquisition unit 16 outputs the predetermined time, detection values by the predetermined time, and the end time when the predetermined time is ended to the analyzer 17. The end time of the predetermined time is used for identifying the time period. For example, when the time period is "09:00 to 09:10", the corresponding end time is "09:10", and the time period is specified. In addition, when the acquisition unit 16 is instructed to stop acquisition of detection values of the acceleration sensor 14, with a switch (not illustrated) or the like, the acquisition unit 16 stops acquisition of detection values from the acceleration sensor 14.

The analyzer 17 calculates the number of steps and the trembling number that occurred within the predetermined time, when the analyzer 17 receives the predetermined time, detection values of the predetermined time, and the end time of the predetermined time from the acquisition unit 16. The analyzer 17 determines whether the detection values within the predetermined time have periodicity. When the detection values within the predetermined time have periodicity, the analyzer 17 calculates the number of steps based on detection values corresponding to the vertical direction. For example, when the direction of the acceleration periodically changes upward, downward, upward, downward..., the analyzer 17 calculates the number of steps, with a set of one upward movement and one downward movement regarded as a step.

After the analyzer 17 calculates the number of steps within the predetermined time, the analyzer 17 determines whether there is a period in which a total sum of differences between magnitudes of vectors of detection values is equal to or larger than a predetermined value for a certain period, for example, hundreds of milliseconds or longer, in a period in which detection values within the predetermined value have no periodicity, that is, a period in which the dog is at a standstill. When there is a period in which the total sum of differences between magnitudes of the vectors of the detection values is equal to or larger than the predetermined value, the analyzer 17 calculates the trembling number, with the period regarded as one tremble. When there is no period in which the total sum of differences between magnitudes of the vectors of the detection values is equal to or larger than the predetermined value, the analyzer 17 sets the trembling number to "0".

When detection values within the predetermined time have no periodicity, the analyzer 17 determines whether there is a period in which a total sum of differences between magnitudes of vectors of detection values is equal to or larger than a predetermined value for a certain period, for example, hundreds of milliseconds or longer. When there is a period in which a total sum of differences between magnitudes of vectors of detection values is equal to or larger than a predetermined value, that is, when the detection device 10 is moving at random with a shake equal to or larger than the predetermined value, the analyzer 17 calculates the trembling number, with the period regarded as one tremble. When there is no period in which a total sum of differences between magnitudes of vectors of detection values is equal to or larger than the predetermined value, the analyzer 17 sets the trembling number to "0". The analyzer 17 stores the calculated number of steps and trembling number as analysis result in the analysis result storage unit 13, in association with the time period based on the predetermined time and the end time of the predetermined time.

The following is explanation of configuration of the terminal device 100. As illustrated in FIG. 1, the terminal device 100 includes a first communication unit 110, a second communication unit 111, a display operation unit 112, a storage unit 120, and a controller 130. In addition to the functional units illustrated in FIG. 1, the terminal device 100 may include various functional units included in a known computer, such as various input devices and sound output devices. Examples of the terminal device 100 include a mobile communication terminal such as a tablet terminal, a smart phone, a mobile phone, and a personal handyphone system (PHS), a slate terminal such as a personal digital assistant (PDA), and a wireless station. As other examples of the terminal device 100, a mobile game terminal or a watch type terminal may be adopted.

The first communication unit 110 is achieved with, for example, a Bluetooth (registered trademark) module, a FeliCa (registered trademark) module, a WUSB module, or an NFC module. The first communication unit 110 is a communication interface connected with the detection device 10 in a wireless manner and managing information communication with the detection device 10.

When the first communication unit 110 receives setting information of communication with the detection device 10 from the controller 130, the first communication unit 110 performs setting on itself in accordance with the setting information. When the first communication unit 110 receives a connection request from the controller 130, the first communication unit 110 transmits the input connection request to the detection device 10. In addition, when the first communication unit 110 receives the number of steps, the trembling number, and the time period from the detection device 10, the first communication unit 110 outputs the received number of steps, trembling number, and time period to the controller 130.

The second communication unit 111 is achieved with, for example, a network Interface card (NIC) or the like, when it is connected to the network N in a wired manner. The second communication unit 111 is achieved with, for example, a wireless communication module compliant with a mobile phone line, a wireless local area network (LAN), and the like, when it is connected to the network N in a wireless manner. When the second communication unit 111 is achieved with a wireless communication module, the second communication unit 111 is connected to the network N through a wireless base station that is not illustrated. Specifically, the second communication unit 111 is a communication interface connected with the server device 200 in a wired or wireless manner through the network N, and managing information communication with the server device 200.

When the second communication unit 111 receives the number of steps, the trembling number, and the time period from the controller 130, the second communication unit 111 transmits the input number of steps, trembling number, and time period to the server device 200 through the network N. When the second communication unit 111 receives information related to the trembling number from the server device 200 through the network N, the second communication unit 111 outputs the received information related to the trembling number to the controller 130.

The display operation unit 112 is a display device to display various types of information, and an input device receiving various types of operations from the user. For example, the display operation unit 112 is achieved with a liquid crystal display or the like, as a display device. For example, the display operation unit 112 is achieved with a touch panel or the like, as an input device. Specifically, the display operation unit 112 has a configuration in which the display device is unified with the input device. The display operation unit 112 outputs an operation input by the user as operation information to the controller 130. The display operation unit 112 also displays a display picture input from the controller 130. The display operation unit 112 may have a configuration in which the display device and the input device are provided separately.

The storage unit 120 is achieved with, for example, a storage device such as a semiconductor memory element such as a RAM and a flash memory. The storage unit 120 stores the number of steps, the trembling number, and the time period that are received from the detection device 10. The storage unit 120 also stores information used for processing in the controller 130.

The controller 130 is achieved by, for example, executing a program stored in the internal storage device with a CPU or an MPU, with a RAM used as a work area. The controller 130 may be achieved with, for example, an integrated circuit such as an ASIC and an FPGA. The controller 130 includes an acquisition unit 131 and a notification unit 132, and achieves or executes functions and operations of information processing explained hereinafter. The internal configuration of the controller 130 is not limited to the configuration illustrated in FIG. 1, but may be another configuration as long as it is configuration to perform information processing described later.

The acquisition unit 131 acquires the number of steps, the trembling number, and the time period from the detection unit 10. When operation information instructing start of analysis based on the user's operation is input from the display operation unit 112 to the acquisition unit 131, the acquisition unit 131 determines whether communication with the detection device 10 has been set for the first communication unit 110. When communication with the detection unit 10 has not been set, the acquisition unit 131 causes the display operation unit 112 to display a message to request the user to perform setting of communication between the detection device 10 and the terminal device 100, to perform setting of communication between the detection device 10 and the terminal device 100. The acquisition unit 131 outputs setting information of communication with the detection device 10 to the first communication unit 110. As setting of communication, specifically, when a Bluetooth (registered trademark) module is used as the first communication unit 110, for example, first, the detection device 10 is set to a searchable state by user's operation. Thereafter, in the terminal device 100, a search operation is performed by user's operation, and the detection device 10 displayed as a connection party on the display operation unit 112 is selected. In this manner, the terminal device 100 is paired with the detection device 10, and can communicate with the detection device 10.

When communication with the detection device 10 has been set or when the communication setting operation described above is finished, the acquisition unit 131 transmits a connection request to the detection device 10 through the first communication unit 110. The acquisition unit 131 receives the number of steps, the trembling number, and the time period corresponding to the connection request, from the detection device 10 through the first communication unit 110. The acquisition unit 131 stores the received number of steps, trembling number, and time period in the storage unit 120, and transmits them to the server device 200 through the second communication unit 111 and the network N.

The notification unit 132 causes the display operation unit 112 to display notification information, that is, a display picture including information related to the trembling number, to notify the user of the information related to the trembling number. The notification unit 132 receives the notification information from the server device 200 through the second communication unit 111 and the network N. The notification unit 132 generates a display picture including the received notification information, outputs the generated display picture to the display operation unit 112 to cause the display operation unit 112 to display the display picture, and notify the user of information related to the trembling member. The notification unit 132 may store the notification information in the storage unit 120, and output the notification information to the display operation unit 112 to cause the display operation unit 112 to display the notification information as history information in response to user's request.

The display picture will be explained hereinafter with reference to FIG. 3 to FIG. 5. FIG. 3 is a diagram illustrating an example of the display picture of the terminal device. As illustrated in FIG. 3, when the notification unit 132 of the terminal device 100 receives notification information from the server device 200, for example, the notification unit 132 causes the display operation unit 112 to display an icon 51. The picture illustrated in FIG. 3 is a display picture displayed on the display operation unit 112 in response to pressing of the icon 51 by the user. The notification unit 132 causes the display operation unit 112 to display a date and time 52 at which notification information was received.

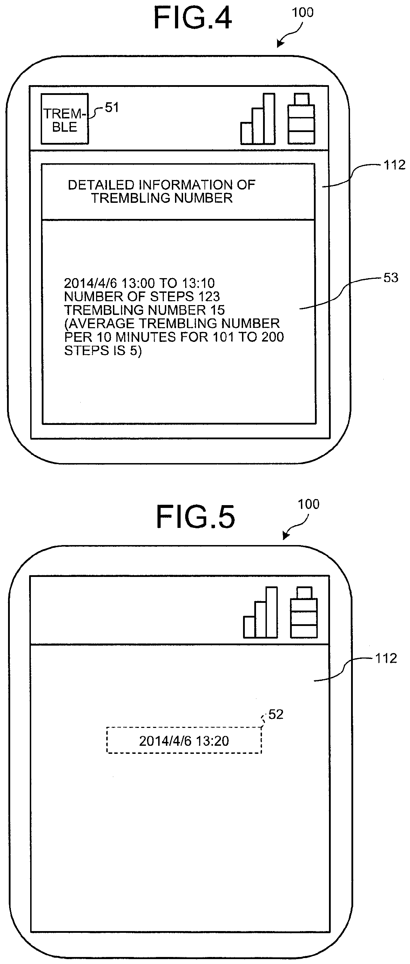

FIG. 4 is a diagram illustrating another example of the display picture of the terminal device. FIG. 4 is a display picture displayed on the display operation unit 112 in response to pressing of an area of the reception date and time 52 by the user, in the display picture of FIG. 3. As illustrated in FIG. 4, when the notification unit 132 receives operation information indicating pressing of the area of the reception date and time 52 from the display operation unit 112, the notification unit 132 causes the display operation unit 112 to display detailed information 53 related to the trembling number. In the example of FIG. 4, information displayed as the detailed information 53 is information that the number of steps is 123, that the trembling number is 15, and that the average trembling number for 101 to 200 steps per 10 minutes is 5, during a time period from 13:00 to 13:10 on April 6, 2014. The user views the detailed information 53, and can recognize that the trembling number is larger than usual, and recognize that a tremble probably related to the health condition of the dog was detected. The detailed information 53 may be erased by long press or the like of the area of the detailed information 53 by the user, to display only the icon 51.

FIG. 5 is a diagram illustrating another example of the display picture of the terminal device. FIG. 5 is a display picture displayed on the display operation unit 112 in response to user's another pressing of the icon 51, in the display picture of FIG. 4. As illustrated in FIG. 5, when the notification unit 132 receives operation information indicating pressing of the icon 51 from the display operation unit 112, the notification unit 132 causes the display operation unit 112 to display the notification information reception date and time 52, and erases display of the icon 51. The reception date and time 52 may be erased by long press or the like of the area of the reception date and time 52 by the user. Specifically, the notification unit 132 displays, for example, reception history of the notification information as the display picture, and displays the icon 51 when new notification information is received. In this manner, the user can easily recognize the new notification information and the history thereof.

The following is explanation of configuration of the server device 200. As illustrated in FIG. 1, the server device 200 includes a communication unit 210, a storage unit 220, and a controller 230. In addition to the functional units illustrated in FIG. 1, the server device 200 may include various types of functional units included in a known computer, such as various types of input devices and sound output devices.

The communication unit 210 is achieved with, for example, a NIC. The communication unit 210 is a communication interface connected with the terminal device 100 in a wired or wireless manner through the network N, and managing information communication with the terminal device 100. When the communication unit 210 receives the number of steps, the trembling number, and the time period from the terminal device 100 through the network N, the communication unit 210 outputs the received number of steps, trembling number, and time period to the controller 230. When the communication unit 210 receives notification information from the controller 230, the communication unit 210 transmits the input notification information to the terminal device 100 through the network N.

The storage unit 220 is achieved with, for example, a storage device such as a semiconductor memory element such as a RAM and a flash memory. The storage unit 220 includes an accumulation storage unit 221 and a formula storage unit 222. The storage unit 220 stores information used for processing in the controller 230.

The accumulation storage unit 221 accumulates and stores the number of steps, the trembling number, and the time period received from the terminal device 100. The accumulation storage unit 221 accumulates and stores, for example, the numbers of steps, the trembling numbers, and the time periods of each detection device 10 from start of the service provided by the motion detection system 1 to the present time. Specifically, the accumulation storage unit 221 accumulates and stores the numbers of steps, the trembling times, and the time periods for each of the dogs to which respective detection devices 10 are attached. Because the accumulation storage unit 221 stores the contents similar to those of the analysis result storage unit 13 of the detection device 10 illustrated in FIG. 2, the detailed explanation thereof is omitted.

The formula storage unit 222 stores a calculation formula of a regression line and a definite formula indicating a threshold of the trembling number, which are calculated in a calculator 235 of the controller 230 described later.

The controller 230 is achieved by, for example, executing a program stored in the internal storage device with the CPU or the MPU, with a RAM used as a work area. The controller 230 may be achieved with an integrated circuit such as an ASIC and an FPGA. The controller 230 includes an acquisition unit 231, a determination unit 232, a generator 233, a notification unit 234, and a calculator 235, to achieve or execute functions and operations of information processing explained hereinafter. The internal configuration of the controller 230 is not limited to configuration illustrated in FIG. 1, but may be another configuration as long as it is configuration to execute information processing described later.

The acquisition unit 231 receives the number of steps, the trembling number, and the time period from the terminal device 100 through the network N and the communication unit 210. The acquisition unit 231 stores the received number of steps, trembling number, and time period in the accumulation storage unit 221, and outputs determination request information to perform determination as to whether the time period includes a tremble probably related to the health condition to the determination unit 232.

When the determination unit 232 receives determination request information from the acquisition unit 231, the determination unit 232 determines whether a definite formula of a threshold to determine whether the time period includes a tremble probably related to the health condition exists. When no definite formula of the threshold exists, the determination unit 232 refers to the accumulation storage unit 221 to determine whether data for definite formula calculation exists. When data for definite formula calculation exists, the determination unit 232 outputs calculation information to the calculator 235. When no data for definite formula calculation exists, the determination unit 232 outputs data lack information to the generator 233.

When the definite formula of the threshold exists, or when the definite formula is calculated by the calculator 235, the determination unit 232 refers to the formula storage unit 222, and determines whether the trembling number is equal to or larger than the threshold, based on the definite formula. When the trembling number is equal to or larger than the threshold, the determination unit 232 outputs determination information indicating that the trembling number is equal to or larger than the threshold to the generator 233. When the trembling number is less than the threshold, the determination unit 232 outputs determination information indicating that the trembling number is less than the threshold to the generator 233.

The generator 233 receives determination information or data lack information from the determination unit 232. When determination information is input from the determination unit 232 to the generator 233, the generator 233 generates notification information that the time period with a large trembling number exists, such as "many trembles are detected from X:YY to X:ZZ" in case of determination information indicating that the trembling number is equal to or larger than the threshold. In addition, in case of determination information indicating that the trembling number is less than the threshold, the generator 233 generates notification information that no time period with large trembling number exists, such as "no time period with large trembling number exists from X o'clock to Y o'clock". When data lack information is input from the determination unit 232 to generator 233, the generator 233 generates notification information that data accumulation is lacking, such as "data necessary for analysis is insufficient". The generator 233 outputs the generated notification information to the notification unit 234.

When the notification unit 234 receives notification information from the generator 233, the notification unit 234 transmits notification information to the terminal device 100 through the communication unit 210 and the network N. The notification unit 234 transmits notification information to the terminal device 100 from which the acquisition unit 231 has acquired the number of steps, the trembling number, and the time period, but the present invention is not limited thereto. For example, when one terminal device 100 is a wireless station installed in a house and another terminal device 100 is a smartphone held by a user, the notification unit 234 may transmit notification information corresponding to the number of steps, the trembling number, and the time period acquired from one terminal device 100 to another terminal device 100.

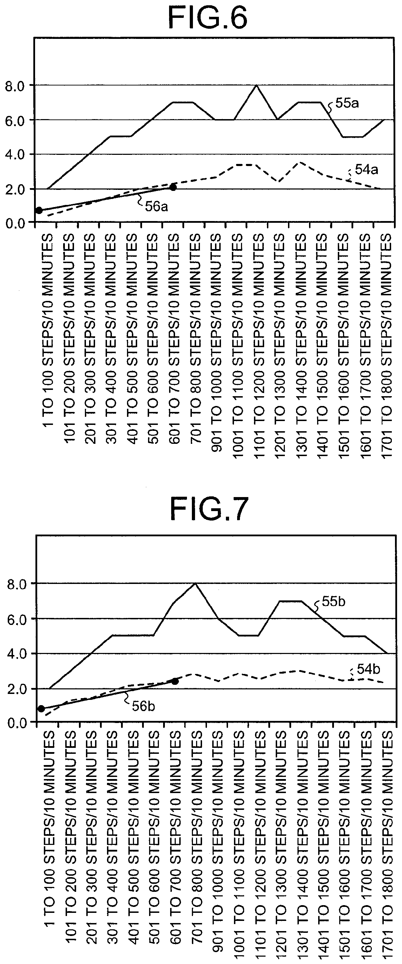

When the calculator 235 receives calculation information from the determination unit 232, the calculator 235 calculates a calculation formula of a regression line and a definite formula indicating the threshold of the trembling number, with reference to the accumulation storage unit 221. The following is explanation of a regression line calculated in the calculator 235. FIG. 6 is a diagram illustrating an example of the regression line. FIG. 6 illustrates the average trembling number per 10 minutes for each number-of-steps zone for 6 months of an individual A. The example of FIG. 6 illustrates a graph 54a of the average trembling number per 10 minutes, and a graph 55a of minimum values of top 3 % of the trembling number per 10 minutes, for number-of-steps zones, each having a range of 100 steps. The example of FIG. 6 also illustrates a regression line 56a in a section up to 700 steps per 10 minutes of the graph 54a. FIG. 7 is a diagram illustrating another example of the regression line. FIG. 7 illustrates the average trembling number per 10 minutes for each number-of-steps zone for 6 months of an individual B different from the individual A of FIG. 6. The example of FIG. 7 illustrates a graph 54b of the average trembling number per 10 minutes, and a graph 55b of minimum values of top 3 % of the trembling number per 10 minutes, for number-of-steps zones, each having a range of 100 steps. The example of FIG. 7 also illustrates a regression line 56b in a section up to 700 steps per 10 minutes of the graph 54b. As illustrated in the regression lines 56a and 56b of FIG. 6 and FIG. 7, the number of steps and the trembling number have correlation when the number of steps is equal to or less than the predetermined number.

To calculate the regression line, first, the calculator 235 calculates the total time for each of the time periods with the number of steps of the predetermined number or less, based on the number of steps and the trembling number acquired per 10 minutes for a certain period of time, for example, 2 weeks. In the example of FIG. 6, the predetermined number is 700 steps. When the number of steps per unit time is larger than the predetermined number, the individual is supposed to be taking a walk outdoors. In such a case, external causes such as a meet with another dog increases, and the correlation between the number of steps and the trembling number reduces. As the total time, the calculator 235 calculates time obtained by multiplying the number of time periods serving as the number-of-steps zone of 1 to 100 steps by 10 minutes, to calculate the time as the total time of the number-of-steps zone of 1 to 100 steps. The calculator 235 calculates the total time for other time periods, each having the number of steps equal to or less than the predetermined number, in the same manner.

Thereafter, the calculator 235 calculates the total of the trembling numbers of the number-of-steps zone, for each of the number-of-steps zones. Specifically, the calculator 235 calculates the total of the detected trembling numbers of a number-of-steps zone, for a certain period of time. Thereafter, the calculator 235 calculates the trembling number per 10 minutes, based on the calculated total time and the total of the trembling numbers. The calculator 235 also calculates a regression line with the trembling numbers per 10 minutes of the respective number-of-steps zones. The calculator 235 calculates a regression line, for example, using a least squares method illustrated in the following Formula (1) and Formula (2).

$$a = \frac{\sum_{i=1}^{n} (yi - Y)(xi - X)}{\sum_{i=1}^{n} (xi - X)^2} \tag{1}$$

$$b = Y - aX \tag{2}$$

In Formulas (1) and (2) described above, xi represents the central value of each number-of-steps zone, and yi represents the trembling number per unit time of each number-of-steps zone. The unit time indicates a time period, that is, 10 minutes in the example described above. X represents an average of xi (i = 1 to n), and Y represents an average of yi (i = 1 to n).

When the regression line is calculated, the calculator 235 calculates a definite formula fd of the threshold to determine that the trembling number is large. The definite formula fd is indicated in the following Formula (3).

$$fd = f(aX + b) \times 2.5 \tag{3}$$

In Formula (3), a represents a calculation result of Formula (1) described above, and b represents a calculation result of Formula (2) described above. The calculator 235 stores the calculated Formulas (1) to (3) in the formula storage unit 222.

The following is explanation of operations of the motion detection system 1 of the first embodiment. The following explanation illustrates the case where the detection device 10 is attached to a dog, data such as the number of steps is transmitted to the terminal device 100 used by a user, and the terminal device 100 is connected with the server device 200 using a mobile phone line through the network N, to detect a tremble probably related to the health condition of the dog.

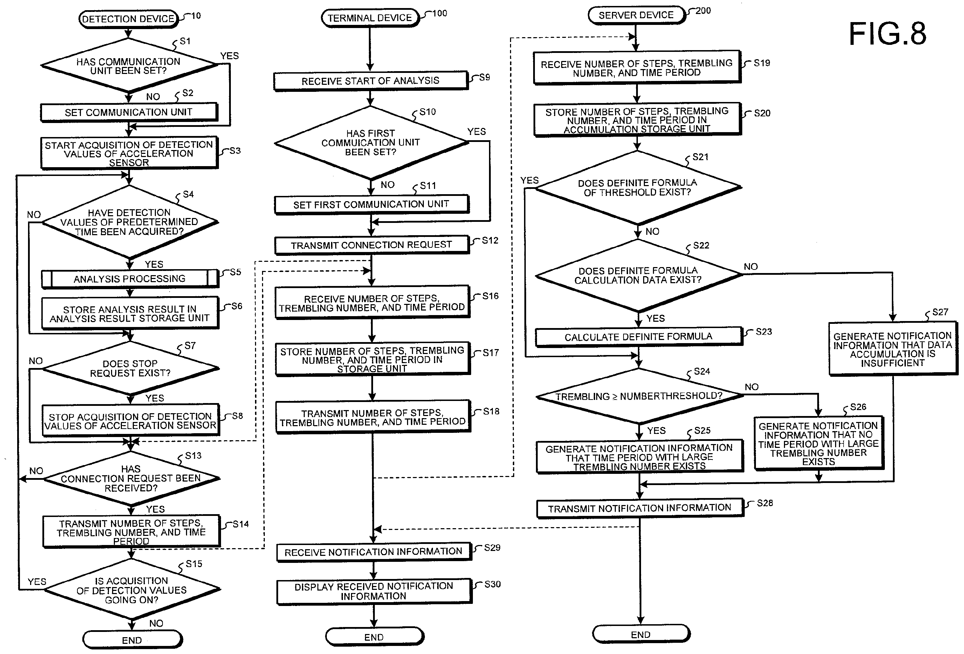

FIG. 8 is a sequence diagram illustrating an example of operations of the motion detection system of the first embodiment. The controller 15 of the detection device 10 determines whether setting to perform communication by the communication unit 11 with the terminal device 100 is finished (Step S1). When the setting is not finished (Step S1: No), the controller 15 outputs setting information of communication with the terminal device 100 to the communication unit 11, to perform setting on the communication unit 11 (Step S2). When the setting is finished (Step S1: Yes), the controller 15 goes to Step S3.

When the acquisition unit 16 is instructed to acquire detection values of the acceleration sensor 14 with a switch that is not illustrated or the like, the acquisition unit 16 starts acquisition of detection values from the acceleration sensor 14 (Step S3). The acquisition unit 16 determines whether detection values of the predetermined time have been acquired (Step S4). When detection values of the predetermined time are not acquired (Step S4: No), the acquisition unit 16 waits for a certain time, and goes to Step S7. When detection values of the determined time have been acquired (Step S4: Yes), the acquisition unit 16 executes analysis processing (Step S5).

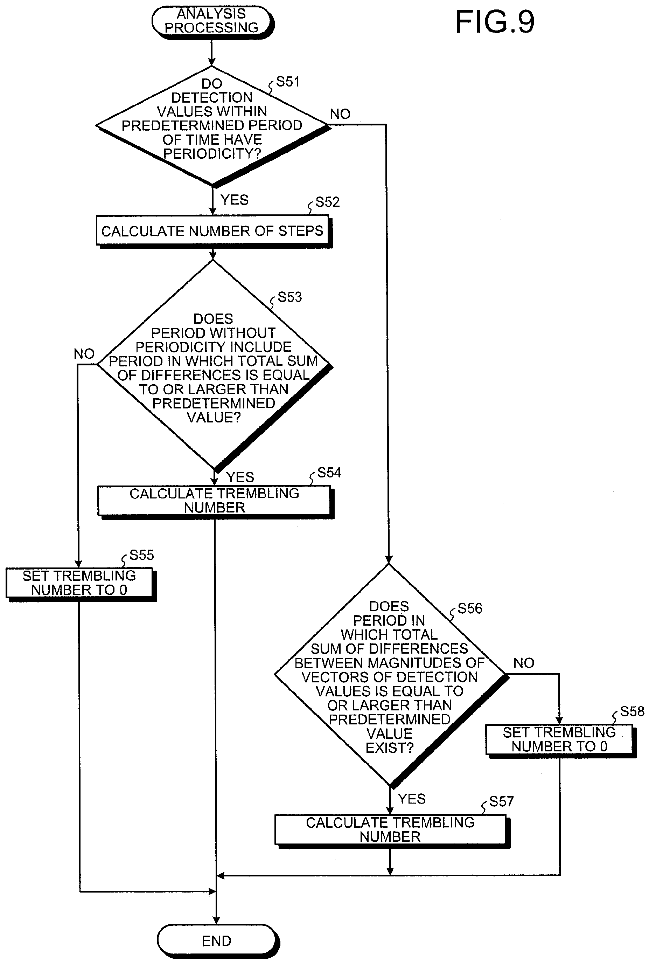

The analysis processing will be explained hereinafter with reference to FIG. 9. FIG. 9 is a flowchart illustrating an example of the analysis processing. The analyzer 17 determines whether detection values in the predetermined time have periodicity (Step S51). When detection values in the predetermined time have periodicity (Step S51: Yes), the analyzer 17 calculates the number of steps based on detection values corresponding to the vertical direction (Step S52). The analyzer 17 determines whether the period in which detection values in the predetermined time have no periodicity includes a period in which the total sum of differences between magnitudes of vectors of the detection values is equal to or larger than the predetermined value (Step S53). When the period includes a period in which the total sum of differences between magnitudes of vectors of the detection values is equal to or larger than the predetermined value (Step S53: Yes), the analyzer 17 calculates the trembling number with the period regarded as one tremble (Step S54), and the operation returns to the original processing. When there is no period in which the total sum of differences between magnitudes of vectors of the detection values is equal to or larger than the predetermined value (Step S53: No), the analyzer 17 sets the trembling number to "0" (Step S55), and the operation returns to the original processing.

Step S51 will be explained hereinafter again. When detection values in the predetermined time have no periodicity (Step S51: No), the analyzer 17 determines whether a period exists in which the total sum of differences between magnitudes of vectors of the detection values is equal to or larger than the predetermined value (Step S56). When a period exists in which the total sum of differences between magnitudes of vectors of the detection values is equal to or larger than the predetermined value (Step S56: Yes), the analyzer 17 calculates the trembling number with the period regarded as one tremble (Step S57), and the operation returns to the original processing. When no period exists in which the total sum of differences between magnitudes of vectors of the detection values is equal to or larger than the predetermined value (Step S56: No), the analyzer 17 sets the trembling number to "0" (Step S58), and the operation returns to the original processing. In this manner, the detection device 10 can calculate the number of steps and the trembling number, based on detection values of the acceleration sensor.

FIG. 8 will be explained hereinafter again. The analyzer 17 stores the calculated number of steps and trembling number as analysis result in the analysis result storage unit 13, in association with the time period based on the predetermined time and the end time of the predetermined time (Step S6).

The acquisition unit 16 determines whether a request to stop acquisition of detection values of the acceleration sensor 14 exists (Step S7). When a stop request exists (Step S7: Yes), the acquisition unit 16 stops acquisition of detection values of the acceleration sensor 14 (Step S8), and goes to Step S13. When no stop request exists (Step S7: No), the acquisition unit 16 continues to acquire detection values of the acceleration sensor 14, and goes to Step S13.

When the acquisition unit 131 of the terminal device 100 receives start of analysis (Step S9), the acquisition unit 131 determines whether communication with the detection device 10 has been set on the first communication unit 110 (Step S10). When communication with the detection device 10 has not been set (Step S10: No), the acquisition unit 131 performs setting on the first communication unit 110 (Step S11). When communication with the detection device 10 has been set (Step S10: Yes), the acquisition unit 131 goes to Step S12. When communication with the detection device 10 has been set or when setting on the first communication unit 110 is finished, the acquisition unit 131 transmits a connection request to the detection device 10 (Step S12).

The controller 15 of the detection device 10 determines whether a connection request is received from the terminal device 100 (Step S13). When no connection request is received (Step S13: No), the operation returns to Step S4. When connection request is received (Step S13: Yes), the controller 15 reads untransmitted number of steps, trembling number, and time period from the analysis result storage unit 13, and transmits them to the terminal device 100 (Step S14). When no number of steps or trembling number is stored in the analysis result storage unit 13, the controller 15 transmits a message that no number of steps or trembling number to be transmitted exists. The acquisition unit 16 determines whether acquisition of detection values of the acceleration sensor 14 is going on (Step S15). When acquisition of detection values of the acceleration sensor 14 is going on (Step S15: Yes), the operation returns to Step S4. When acquisition of detection values of the acceleration sensor 14 is not going on (Step S15: No), the acquisition unit 16 ends the processing of the detection device 10.

The acquisition unit 131 of the terminal device 100 receives the number of steps, the trembling number, and the time period corresponding to the connection request from the detection device 10 through the first communication unit 110 (Step S16). The acquisition unit 131 stores the received number of steps, trembling number, and time period in the storage unit 120 (Step S17). The acquisition unit 131 also transmits the received number of steps, trembling number, and time period to the server device 200 (Step S18).

The acquisition unit 231 of the server device 200 receives the number of steps, the trembling number, and the time period from the terminal device 100 (Step S19). The acquisition unit 231 stores the received number of steps, trembling number, and time period in the accumulation storage unit 221 (Step S20). The acquisition unit 231 outputs determination request information to the determination unit 232 to determine whether the time period includes a tremble probably related to the health condition.

When the determination unit 232 receives determination request information from the acquisition unit 231, the determination unit 232 determines whether any definite formula of the threshold exists (Step S21). When any definite formula of the threshold exists (Step S21: Yes), the determination unit 232 goes to Step S24. When no definite formula of the threshold exists (Step S21: No), the determination unit 232 determines whether any data for definite formula calculation exists, with reference to the accumulation storage unit 221 (Step S22). When any data for definite formula calculation exists (Step S22: Yes), the determination unit 232 outputs calculation information to the calculator 235.

When calculation information is input from the determination unit 232 to the calculator 235, the calculator 235 calculates calculation formula of the regression line and the definite formula indicating the threshold of the trembling number, with reference to the accumulation storage unit 221 (Step S23). The calculator 235 stores the calculated calculation formula of the regression line and the definite formula in the formula storage unit 222.

When the definite formula of the threshold exists (Step S21: Yes), or when a definite formula is calculated by the calculator 235 (Step S23), the determination unit 232 determines, based on the definite formula, whether the trembling number is equal to or larger than the threshold, with reference to the formula storage unit 222 (Step S24). When the trembling number is equal to or larger than the threshold (Step S24: Yes), the determination unit 232 outputs determination information indicating that the trembling number is equal to or larger than the threshold to the generator 233. When the trembling number is less than the threshold (Step S24: No), the determination unit 232 outputs determination information indicating that the trembling number is less than the threshold to the generator 233. When no data for definite formula calculation exists (Step S22: No), the determination unit 232 outputs data lack information to the generator 233.

The generator 233 receives determination information or data lack information from the determination unit 232. When determination information is input from the determination unit 232 to the generator 233, the generator 233 generates notification information that a time period with large trembling number exists (Step S25) in case of determination information indicating that the trembling number is equal to or larger than the threshold. In case of determination information indicating that the trembling number is less than the threshold, the generator 233 generates notification information that no period with large trembling number exists (Step S26). When data lack information is input from the determination unit 232 to the generator 233, the generator 233 generates notification information that data accumulation is lacking (Step S27). The generator 233 outputs the generated notification information to the notification unit 234. When notification information is input from the generator 233 to the notification unit 234, the notification unit 234 transmits notification information to the terminal device 100 (Step S28).

The notification unit 132 of the terminal device 100 receives notification information from the server device 200 (Step S29). The notification unit 132 outputs the received notification information to the display operation unit 112 and causes the display operation unit 112 to display the notification information (Step S30), to notify the user of information related to the trembling number. In this manner, the motion detection system 1 can detect a tremble probably related to the health condition of the dog to which the detection device 10 is attached, and alert the terminal device 100's user as the owner of the dog to the health condition of the dog.

In this manner, the server device 200 acquires the number of steps and the trembling number based on detection values of the acceleration sensor 14, and the time period at which the number of steps and the trembling number are detected, from the terminal device 100. The server device 200 determines whether the trembling number occurring in the time period with the number of steps of the predetermined number or less exceeds a threshold, in the time period with the number of steps exceeding the predetermined number and the time period with the number of steps of the predetermined number or less. As a result of determination, when the trembling number exceeds the threshold, the server device 200 generates information based on the trembling number, and notifies the terminal device 100 of the generated information. As a result, a tremble probably related to the health condition can be detected. Tremble detection accuracy can also be improved. In addition, increase in trembles that may serve as a sign of diseases can be recognized, even when the user is sleeping or away from home.

The server device 200 determines whether the trembling number occurring in the time period with the number of steps of the predetermined number or less exceeds the threshold corresponding to the regression line, based on the regression line based on the numbers of steps and the trembling numbers of a certain period of time. As a result, the case in which the trembling number is larger than average can be detected.

The server device 200 also acquires the number of steps and the trembling number based on detection values for each predetermined time, and the time period in which the number of steps and the trembling number have been detected from the terminal device 100. As a result, the time period in which the tremble has been detected can be easily detected.

When detection values of the acceleration sensor 14 have periodicity, the server device 200 acquires the number of steps based on the detection values of the acceleration sensor 14 corresponding to the vertical direction as the number of steps. When detection values of the acceleration sensor 14 have no periodicity, the server device 200 acquires the trembling number with the total sum of differences in magnitudes of vectors of the detection values of the acceleration sensor 14 equal to or larger than the predetermined value, as the trembling number. As a result, the number of steps and the trembling number distinguished from each other can be calculated.

The terminal device 100 receives the number of steps and the trembling number, and the time period in which the number of steps and the trembling number are detected from the detection device 10 attached to an animal, and the server device 200 receives the received number of steps and trembling number, and the time period in which the number of steps and the trembling number are detected from the terminal device 100. As a result, the number of steps and the trembling number of the animal can be detected.

The server device 200 calculates the regression line based on the number of steps and the trembling number for the certain period of time and the threshold corresponding to the regression line, based on the number of steps and the trembling number acquired from the terminal device 100, and the time period in which the number of steps and the trembling number are acquired. As a result, the threshold of the trembling number can be set in accordance with the number-of-steps zone.

In the first embodiment described above, calculation is performed for the case in which the calculation formula of the regression line and the definite formula indicating the threshold of the trembling number do not exist, but the present invention is not limited thereto. For example, in a growth period of a dog, the calculation formula of the regression line and the definite formula indicating the threshold of the trembling number may be recalculated using recent data for every several months. In addition, in an old age of a dog, for example, the calculation formula of the regression line and the definite formula indicating the threshold of the trembling number may be recalculated using recent data for every year. In this manner, a tremble probably related to the health condition can be easily detected, even in a period in which the body of a dog greatly changes.

In the first embodiment described above, the system determines whether the trembling number occurring in the time period with the number of steps of the predetermined number or less exceeds the threshold, but the present invention is not limited thereto. For example, the detection device 10 may be provided with a positioning unit, to determine whether the trembling number occurring in a time period when the positional information of the detection device 10 exists within a predetermined range exceeds the threshold. An embodiment in this case will be explained as the second embodiment hereinafter.

Second Embodiment

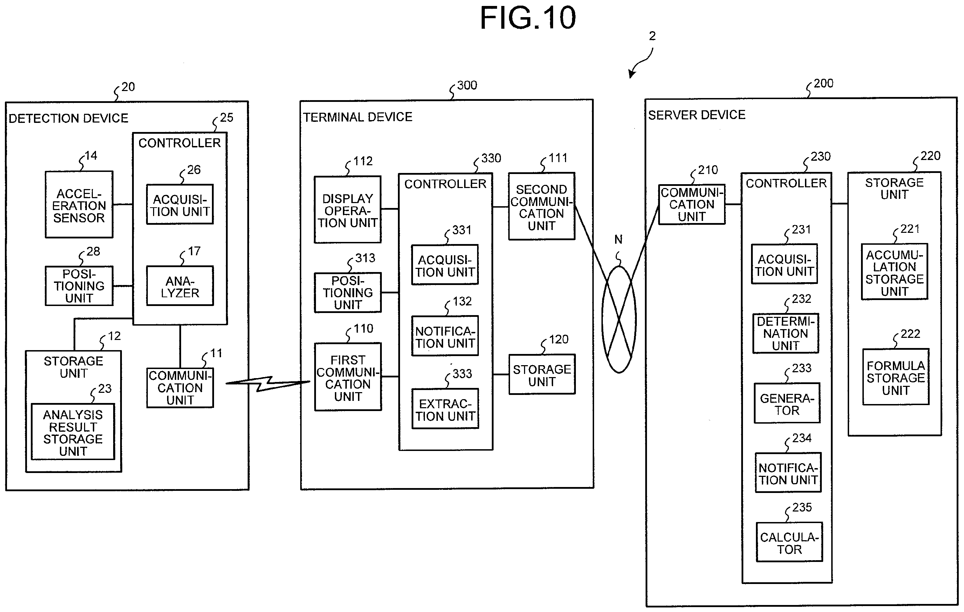

FIG. 10 is a block diagram illustrating an example of configuration of a motion detection system of a second embodiment. Constituent elements same as those of the motion detection system 1 of the first embodiment will be denoted by the same reference numerals, and explanation of the overlapping configuration and operations will be omitted. A motion detection system 2 of the second embodiment is different from the motion detection system 1 of the first embodiment in that a detection device 20 and a terminal device 300 perform positioning and use positional information.

The detection device 20 of the second embodiment is different from the detection device 10 of the first embodiment in that the detection device 20 includes a controller 25, an acquisition unit 26, and an analysis result storage unit 23, instead of the controller 15, the acquisition unit 16, and the analysis result storage unit 13, and further includes a positioning unit 28. The terminal device 300 of the second embodiment is different from the terminal device 100 of the first embodiment in that the terminal device 300 includes an acquisition unit 331 in a controller 330, instead of the acquisition unit 131, and further includes an extraction unit 333 in the controller 330, and a positioning unit 313.

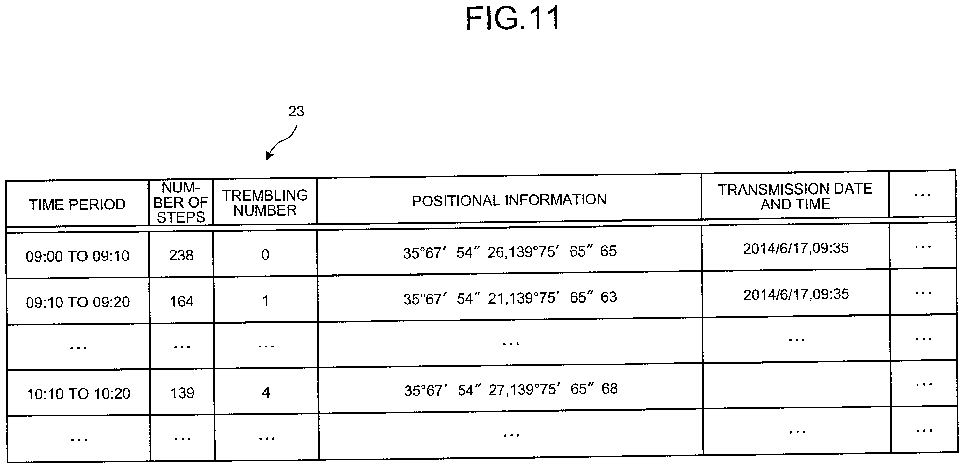

In comparison with the analysis result storage unit 13 of the first embodiment, the analysis result storage unit 23 of the detection device 20 further stores positional information in association with the time period in which the number of steps and the trembling number are detected. FIG. 11 is a diagram illustrating another example of the analysis result storage unit. As illustrated in FIG. 11, the analysis result storage unit 23 includes items such as "time period", "number of steps", "trembling number", "positional information", and "transmission date and time". In the analysis result storage unit 23, one record is generated for each of predetermined time periods.

The item "positional information" indicates positional information (latitude and longitude) measured by the positioning unit 28. The positional information may be, for example, positional information at the start or the end of the corresponding time period, or may be average positional information in each time period. The other items are the same as those in the analysis result storage unit 13 of the first embodiment, and explanation thereof is omitted.

With reference to FIG. 10 again, in comparison with the controller 15 of the first embodiment, when the controller 25 receives a connection request, the controller 25 reads positional information, in addition to the number of steps, the trembling number, and the time period, from the analysis result storage unit 23, and transmits them to the terminal device 300 through the communication unit 11.

In comparison with the acquisition unit 16 of the first embodiment, when the acquisition unit 26 is instructed, with a switch that is not illustrated or the like, to acquire positional information from the positioning unit 28, the acquisition unit 26 starts acquisition of positional information from the positioning unit 28, together with detection values from the acceleration sensor 14. The acquisition unit 26 stores the corresponding positional information in the analysis result storage unit 23, in accordance with the analysis result stored in the analysis result storage unit 23 by the analyzer 17. When the acquisition unit 26 is instructed, with a switch that is not illustrated or the like, to stop acquisition of detection values of the acceleration sensor 14 and positional information from the positioning unit 28, the acquisition unit 26 stops acquisition of detection values from the acceleration sensor 14 and positional information from the positioning unit 28.

The positioning unit 28 receives a signal of a satellite positioning system. As the satellite positioning system, the positioning unit 28 receives a signal of global navigation satellite system such as a global positioning system (GPS), a global navigation satellite system (GLONASS), Galileo, and Compass, to perform positioning. When the positioning unit 28 is requested to perform positioning from the controller 25, the positioning unit 28 performs positioning, and outputs a positioning result as positional information based on a positioning system such as a world geodetic system (WGS) 84. The positional information is indicated with, for example, latitude and longitude. When the positioning unit 28 is requested to successively continue positioning from the controller 25, the positioning unit 28 successively performs positioning, and continues output of positional information until the positioning unit 28 is requested to stop positioning from the controller 25. The positioning unit 28 may receive a signal from a regional satellite system, such as a quasi-zenith satellite system, Indian regional navigational satellite system, Doppler orbitography and radio-positioning integrated by satellite (DORIS), and Beidou navigation satellite system, as the satellite positioning system.

The positioning unit 313 of the terminal device 300 receives a signal from a satellite positioning system. The positioning unit 313 receives a signal from a global navigation satellite system such as GPS, GLONASS, Galileo, and Compass, as the satellite positioning system, to perform positioning. When the positioning unit 313 is requested to perform positioning from the controller 330, the positioning unit 313 performs positioning, and outputs a positioning result as positional information based on the positioning system such as the WGS 84. When the positioning unit 313 is requested to successively continue positioning from the controller 330, the positioning unit 313 successively performs positioning, and continues output of positional information until the positioning unit 313 is requested to stop positioning from the controller 330. The positioning unit 313 may receive a signal from a regional satellite system, such as a quasi-zenith satellite system, Indian regional navigational satellite system, Doppler orbitography and radio-positioning integrated by satellite (DORIS), and Beidou navigation satellite system, as the satellite positioning system.

The acquisition unit 331 acquires positional information from the positioning unit 313, and stores the acquired positional information as a registration position of the terminal device 300 in the storage unit 120. The position of the terminal device 300 is a position serving as a basis to determine the distance from the detection device 20 and, for example, can be set to the home of the user. The acquisition unit 331 acquires the number of steps, the trembling number, the time period, and the positional information from the detection device 20. When the acquisition unit 331 receives operation information to be instructed to start analysis based on an operation of a user from the display operation unit 112, the acquisition unit 331 determines whether communication with the detection device 20 has been set for the first communication unit 110. When communication with the detection device 20 has not been set, the acquisition unit 331 causes the display operation unit 112 to display a message to request the user to perform setting of communication between the detection device 20 and the terminal device 300, to perform setting of communication between the detection device 20 and the terminal device 300. The acquisition unit 331 outputs setting information of communication with the detection device 20 to the first communication unit 110. The detection device 20 is set to a searchable state by an operation of a user. Thereafter, in the terminal device 300, a search operation is performed by an operation of a user, and the detection device 20 displayed as a connection party on the display operation unit 112 is selected. In this manner, the terminal device 300 is paired with the detection device 20, and enabled to communicate with the detection device 20.

When communication with the detection device 20 has been set or when the communication setting operation described above is finished, the acquisition unit 331 transmits a connection request to the detection device 20 through the first communication unit 110. The acquisition unit 331 receives the number of steps, the trembling number, the time period, and the positional information corresponding to the connection request, from the detection device 20 through the first communication unit 110. The acquisition unit 331 stores the received number of steps, trembling number, time period, and positional information in the storage unit 120, and instructs the extraction unit 333 to perform extraction.

When the extraction unit 333 is instructed from the acquisition unit 331 to perform extraction, the extraction unit 333 calculates positional information of the predetermined range from the registration position of the terminal device 300, with reference to the storage unit 120. For example, the extraction unit 333 can set the predetermined range to a range with a radius of 50 m. The extraction unit 333 extracts the number of steps, the trembling number, and the time period within the predetermined range from the registration position, among the numbers of steps, the trembling numbers, the time periods and pieces of positional information stored in the storage unit 120 by the acquisition unit 331. The extraction unit 333 transmits the extracted number of steps, trembling number, and time period to the server device 200 through the second communication unit 111 and the network N. The extraction unit 333 may transmit the number of steps, the trembling number, and the time period to the server device 200 regardless of the positional information, when the trembling number is equal to or larger than the predetermined value, for example, at least twice as large as the average of the trembling number occurring in the time period with the number of steps of the predetermined number or less.

The definite formula of the threshold stored in the formula storage unit 222 of the server device 200 is a definite formula of the threshold calculated based on the number of steps, the trembling number, and the time period extracted by the extraction unit 333 of the terminal device 300, with the positional information within the predetermined range from the registration position.

The following is explanation of operations of the motion detection system 2 of the second embodiment. Among processes executed by the detection device 20, the terminal device 300, and the server device 200 of the second embodiment, processes that are the same as those of the detection device 10, the terminal device 100, and the server device 200 of the first embodiment will be provided with the same step numbers, and explanation thereof is omitted.

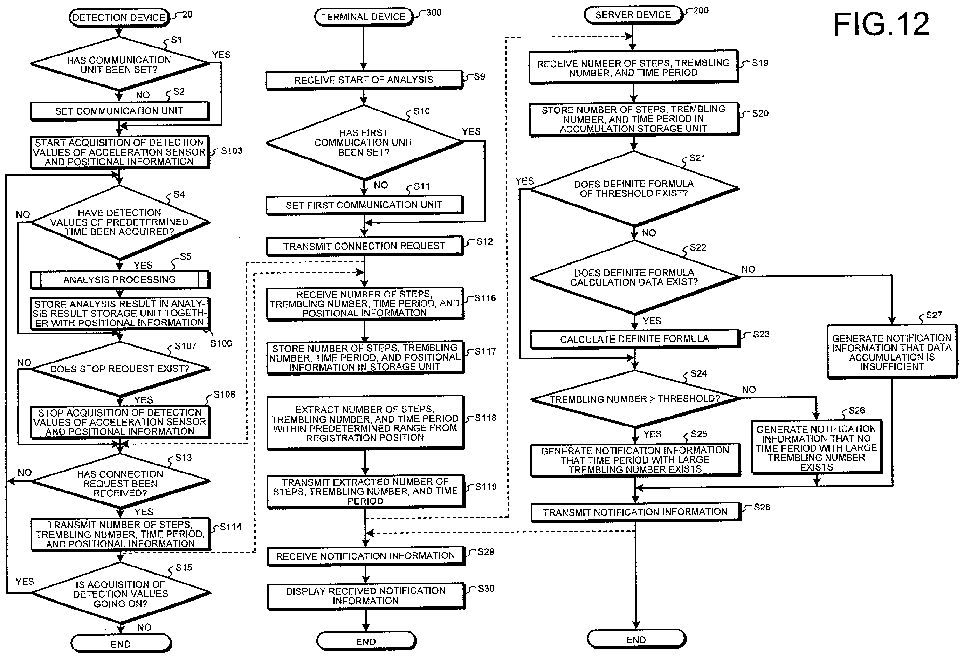

FIG. 12 is a sequence diagram illustrating an example of operations of the motion detection system of the second embodiment. When the acquisition unit 26 of the detection device 20 is instructed, with a switch that is not illustrated or the like, to acquire detection values of the acceleration sensor 14 and positional information from the positioning unit 28, the acquisition unit 26 starts acquisition of positional information from the positioning unit 28, together with detection values from the acceleration sensor 14 (Step S103). The acquisition unit 26 determines whether detection values of the predetermined time have been acquired (Step S4). When detection values of the predetermined time are not acquired (Step S4: No), the acquisition unit 26 waits for a certain time, and proceeds to Step S107. When detection values of the determined time have been acquired (Step S4: Yes), the acquisition unit 26 executes analysis processing (Step S5).

The acquisition unit 26 stores the corresponding positional information in the analysis result storage unit 23, in accordance with the analysis result stored in the analysis result storage unit 23 by the analyzer 17 (Step S106). The acquisition unit 26 determines whether a request to stop acquisition of detection values of the acceleration sensor 14 and acquisition of positional information from the positioning unit 28 exists (Step S107). When a stop request exists (Step S107: Yes), the acquisition unit 26 stops acquisition of detection values of the acceleration sensor 14 and positional information from the positioning unit 28 (Step S108), and proceeds to Step S13. When no stop request exists (Step S107: No), the acquisition unit 26 continues to acquire detection values of the acceleration sensor 14 and positional information from the positioning unit 28, and proceeds to Step S13.

When the controller 25 receives a connection request (Step S13: Yes), the controller 25 reads untransmitted number of steps, trembling number, time period, and positional information from the analysis result storage unit 23, and transmits them to the terminal device 300 (Step S114). When no number of steps or trembling number is stored in the analysis result storage unit 23, the controller 25 transmits a message that no number of steps or trembling number to be transmitted exists.

The acquisition unit 331 of the terminal device 300 receives the number of steps, the trembling number, the time period and the positional information corresponding to the connection request from the detection device 20 through the first communication unit 110 (Step S116). The acquisition unit 331 stores the received number of steps, trembling number, time period, and positional information in the storage unit 120 (Step S117), and instructs the extraction unit 333 to perform extraction.

When the extraction unit 333 is instructed from the acquisition unit 331 to perform extraction, the extraction unit 333 calculates positional information in the predetermined range from the registration position of the terminal device 300, with reference to the storage unit 120. The extraction unit 333 extracts the number of steps, the trembling number, and the time period within the predetermined range from the registration position, among the numbers of steps, the trembling numbers, the time periods and pieces of positional information stored in the storage unit 120 by the acquisition unit 331 (Step S118). The extraction unit 333 transmits the extracted number of steps, trembling number, and time period to the server device 200 through the second communication unit 111 and the network N (Step S119).

As described above, the server device 200 receives the number of steps and the trembling number based on detection values of the acceleration sensor 14, the time period in which the number of steps and the trembling number are detected, and the positional information from the terminal device 300. The server device 200 also determines whether the trembling number corresponding to the number of steps occurring in the time period in the case where the positional information falls within the predetermined range from the terminal device 300 exceeds the threshold. As a result of determination, when the trembling number exceeds the threshold, the server device 200 generates information based on the trembling number, and notifies the terminal device 300 of the generated information. As a result, a tremble probably related to the health condition can be detected in accordance with the positional information.

In the second embodiment described above, the number of steps, the trembling number, and the time period within the predetermined range from the registration position are extracted, based on the positional information measured by the positioning unit 28, but the present invention is not limited thereto. For example, a connection state of communication of the communication unit 11 of the detection device 10 of the first embodiment may be acquired, to determine whether the trembling number occurring in the time period in the case where the communication connection state is a communication possible state exceeds the threshold. An embodiment in this case will be explained hereinafter as the third embodiment.

Third Embodiment

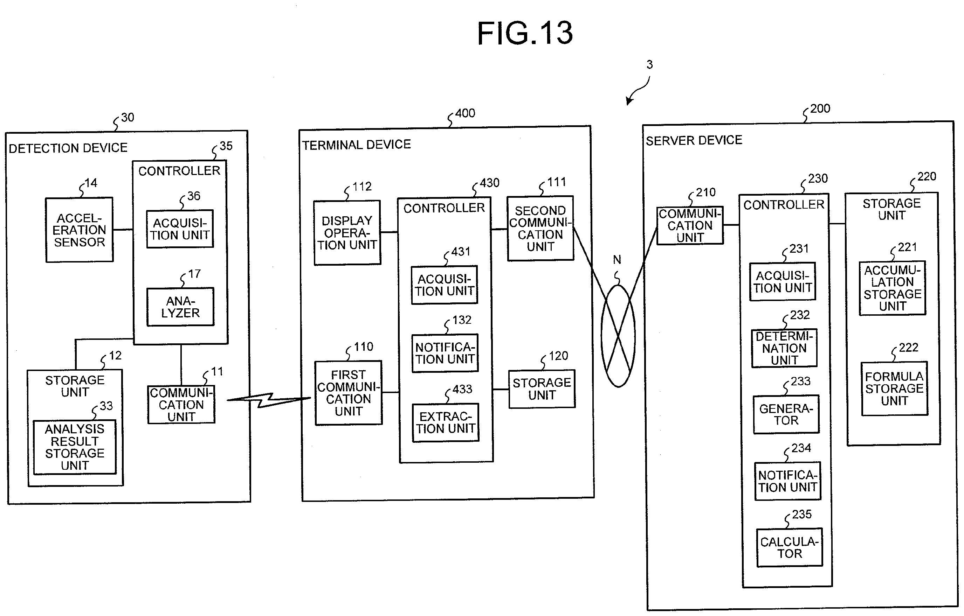

FIG. 13 is a block diagram illustrating an example of configuration of a motion detection system of a third embodiment. Constituent elements same as those of the motion detection system 1 of the first embodiment will be denoted by the same reference numerals, and explanation of the overlapping configuration and operations will be omitted. A motion detection system 3 of the third embodiment is different from the motion detection system 1 of the first embodiment in that the motion detection system 3 uses communication information related to a connection state of communication between a detection device 30 and a terminal device 400.

The detection device 30 of the third embodiment is different from the detection device 10 of the first embodiment in that the detection device 30 includes a controller 35, an acquisition unit 36, and an analysis result storage unit 33, instead of the controller 15, the acquisition unit 16, and the analysis result storage unit 13. The terminal device 400 of the third embodiment is different from the terminal device 100 of the first embodiment, in that the terminal device 400 includes an acquisition unit 431 in a controller 430, instead of the acquisition unit 131, and further includes an extraction unit 433 in the controller 430.

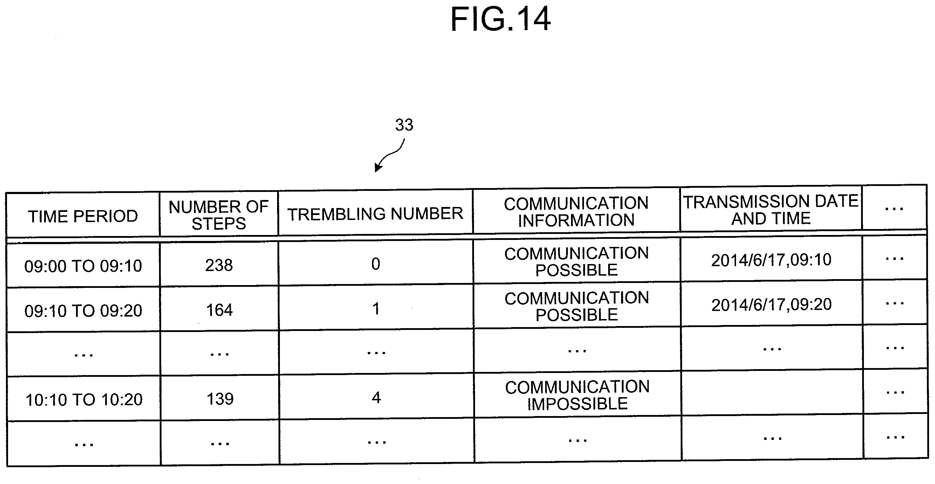

In comparison with the analysis result storage unit 13 of the first embodiment, the analysis result storage unit 33 of the detection device 30 further stores communication information indicating a connection state of communication, in association with the time period in which the number of steps and the trembling number are detected. FIG. 14 is a diagram illustrating another example of the analysis result storage unit. As illustrated in FIG. 14, the analysis result storage unit 33 includes items such as "time period", "number of steps", "trembling number", "communication information", and "transmission date and time". One record for each of predetermined time periods is generated in the analysis result storage unit 33.

The item "communication information" indicates a connection state of communication of the communication unit 11. When the detection device 30 can communicate with the terminal device 400, the item is set to "communication possible". When it is impossible for the detection device 30 to communicate with the terminal device 400, the item is set to "communication impossible". The other items are the same as those in the analysis result storage unit 13 of the first embodiment, and explanation thereof is omitted.

With reference to FIG. 13 again, in comparison with the controller 15 of the first embodiment, when the controller 35 receives a connection request from the terminal device 400 through the communication unit 11, the controller 35 further reads communication information from the analysis result storage unit 33 in addition to the number of steps, the trembling number, and the time period, and transmits them to the terminal device 400 through the communication unit 11.

In comparison with the acquisition unit 16 of the first embodiment, when the acquisition unit 36 is instructed, with a switch that is not illustrated or the like, to further acquire communication information of the communication unit 11, the acquisition unit 36 starts acquisition of communication information from the communication unit 11, together with detection values from the acceleration sensor 14. The acquisition unit 36 stores the corresponding communication information in the analysis result storage unit 33, in accordance with the analysis result stored in the analysis result storage unit 33 by the analyzer 17. When the acquisition unit 36 is instructed, with a switch that is not illustrated or the like, to stop acquisition of detection values from the acceleration sensor 14 and communication information of the communication unit 11, the acquisition unit 36 stops acquisition of detection values from the acceleration sensor 14 and communication information from the communication unit 11.

The acquisition unit 431 of the terminal device 400 acquires the number of steps, the trembling number, the time period, and the communication information from the detection device 30. When the acquisition unit 431 receives operation information to instruct the acquisition unit 431 to start analysis based on an operation of a user from the display operation unit 112, the acquisition unit 431 determines whether communication with the detection device 30 has been set for the first communication unit 110. When communication with the detection device 30 has not been set, the acquisition unit 431 causes the display operation unit 112 to display a message to request the user to perform setting of communication between the detection device 30 and the terminal device 400, to perform setting of communication between the detection device 30 and the terminal device 400. The acquisition unit 431 outputs setting information of communication with the detection device 30 to the first communication unit 110. The detection device 30 is set to a searchable state by an operation of a user. Thereafter, in the terminal device 400, a search operation is performed by an operation of a user, and the detection device 30 displayed as a connection party on the display operation unit 112 is selected. In this manner, the terminal device 400 is paired with the detection device 30, and enabled to communicate with the detection device 30.

When communication with the detection device 30 has been set or when the communication setting operation described above is finished, the acquisition unit 431 transmits a connection request to the detection device 30 through the first communication unit 110. The acquisition unit 431 receives the number of steps, the trembling number, the time period, and communication information corresponding to the connection request, from the detection device 30 through the first communication unit 110. The acquisition unit 431 stores the received number of steps, trembling number, time period, and communication information in the storage unit 120, and instructs the extraction unit 433 to perform extraction.

When the extraction unit 433 is instructed from the acquisition unit 431 to perform extraction, the extraction unit 433 extracts the number of steps, the trembling number, and the time period with the communication information of "communication possible", among the numbers of steps, the trembling numbers, the time periods stored in the storage unit 120 by the acquisition unit 431. The extraction unit 433 transmits the extracted number of steps, trembling number, and time period to the server device 200 through the second communication unit 111 and the network N.

The definite formula of the threshold stored in the formula storage unit 222 of the server device 200 is a definite formula of the threshold calculated based on the number of steps, the trembling number, and the time period extracted by the extraction unit 433 of the terminal device 400, with the communication information of "communication possible".

The following is explanation of operations of the motion detection system 3 of the third embodiment. Among processes executed by the detection device 30, the terminal device 400, and the server device 200 of the third embodiment, processes that are the same as those of the detection device 10, the terminal device 100, and the server device 200 of the first embodiment will be provided with the same step numbers, and explanation thereof is omitted.

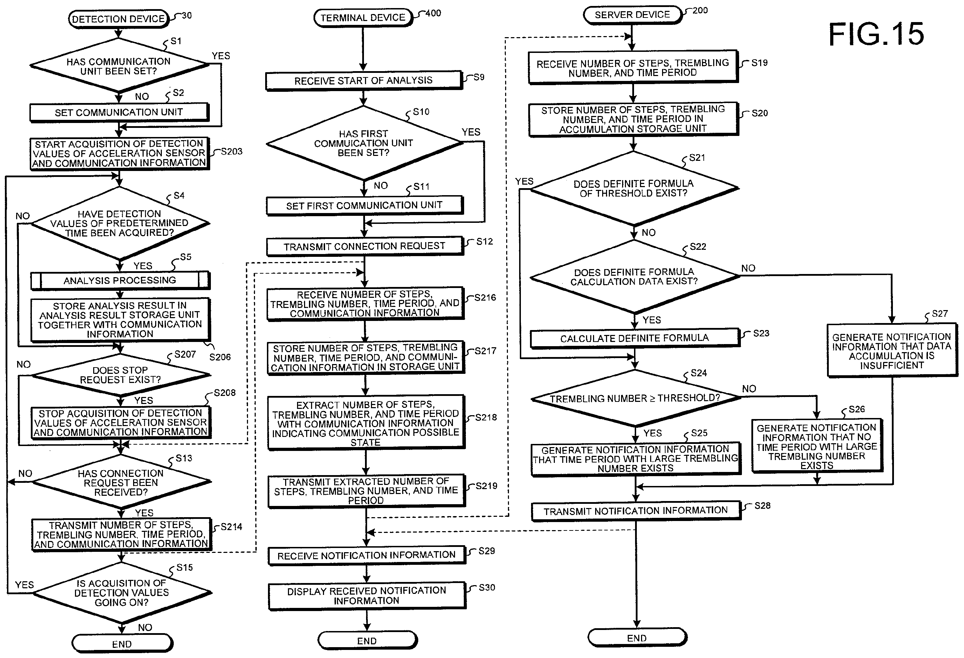

FIG. 15 is a sequence diagram illustrating an example of operations of the motion detection system of the third embodiment. When the acquisition unit 36 of the detection device 30 is instructed, with a switch that is not illustrated or the like, to acquire detection values of the acceleration sensor 14 and communication information of the communication unit 11, the acquisition unit 36 starts acquisition of communication information of the communication unit 11, together with detection values from the acceleration sensor 14 (Step S203). The acquisition unit 36 determines whether detection values of the predetermined time have been acquired (Step S4). When detection values of the predetermined time are not acquired (Step S4: No), the acquisition unit 36 waits for a certain time, and proceeds to Step S207. When detection values of the determined time have been acquired (Step S4: Yes), the acquisition unit 36 executes analysis processing (Step S5).

The acquisition unit 36 stores the corresponding communication information in the analysis result storage unit 33, in accordance with the analysis result stored in the analysis result storage unit 33 by the analyzer 17 (Step S206). The acquisition unit 36 determines whether a request to stop acquisition of detection values of the acceleration sensor 14 and acquisition of communication information of the communication unit 11 exists (Step S207). When a stop request exists (Step S207: Yes), the acquisition unit 36 stops acquisition of detection values of the acceleration sensor 14 and communication information of the communication unit 11 (Step S208), and proceeds to Step S13. When no stop request exists (Step S207: No), the acquisition unit 36 continues to acquire detection values of the acceleration sensor 14 and communication information of the communication unit 11, and proceeds to Step S13.

When the controller 35 receives a connection request (Step S13: Yes), the controller 35 reads untransmitted number of steps, trembling number, time period, and communication information from the analysis result storage unit 33, and transmits them to the terminal device 400 (Step S214). When no number of steps or trembling number is stored in the analysis result storage unit 33, the controller 35 transmits a message that no number of steps or trembling number to be transmitted exists.

The acquisition unit 431 of the terminal device 400 receives the number of steps, the trembling number, the time period and the communication information corresponding to the connection request from the detection device 30 through the first communication unit 110 (Step S216). The acquisition unit 431 stores the received number of steps, trembling number, time period, and communication information in the storage unit 120 (Step S217), and instructs the extraction unit 433 to perform extraction.

When the extraction unit 433 is instructed from the acquisition unit 431 to perform extraction, the extraction unit 433 extracts the number of steps, the trembling number, and the time period with the communication information of "communication possible", among the numbers of steps, the trembling numbers, and the time periods stored in the storage unit 120 by the acquisition unit 431 (Step S218). The extraction unit 433 transmits the extracted number of steps, trembling number, and time period to the server device 200 through the second communication unit 111 and the network N (Step S219).

As described above, the server device 200 receives the number of steps and the trembling number based on detection values of the acceleration sensor 14, the time period in which the number of steps and the trembling number are detected, and the connection state of communication from the terminal device 400. The server device 200 also determines whether the trembling number corresponding to the number of steps occurring in the time period in the case where the connection state of communication is a communication possible state exceeds the threshold. As a result of determination, when the trembling number exceeds the threshold, the server device 200 generates information based on the trembling number, and notifies the terminal device 400 of the generated information. As a result, a tremble probably related to the health condition can be detected in accordance with the connection state of communication between the detection device 30 and the terminal device 400.

the third embodiment described above has the configuration of acquiring the connection state of communication of the communication unit 11 of the detection device 30, but the present invention is not limited thereto. For example, a connection state of communication of the first communication unit 110 of the terminal device 400 may be acquired as the communication information, to extract the number of steps, the trembling number, and the time period based on the communication information related to the terminal device 400.

In addition, in the first to the third embodiments described above, the server device 200 determines whether the trembling number according to the number of steps exceeds the threshold, but the present invention is not limited thereto. For example, a terminal device 500 may determine whether the trembling number exceeds the threshold. An embodiment in this case will be explained hereinafter as the fourth embodiment.

Fourth Embodiment

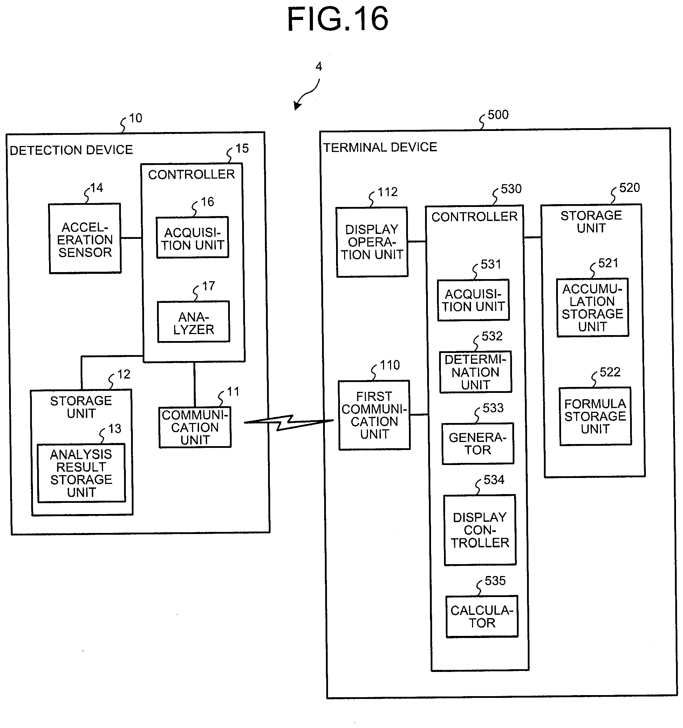

FIG. 16 is a block diagram illustrating an example of configuration of a motion detection system of a fourth embodiment. Constituent elements same as those of the motion detection system 1 of the first embodiment will be denoted by the same reference numerals, and explanation of the overlapping configuration and operations will be omitted. A motion detection system 4 of the fourth embodiment is different from the motion detection system 1 of the first embodiment in that a terminal device 500 performs the process of the server device 200.

The terminal device 500 of the fourth embodiment is different from the terminal device 100 of the first embodiment, in that the terminal device 500 includes an acquisition unit 531, a determination unit 532, a generator 533, a display controller 534, and a calculator 535 in a controller 530, instead of the acquisition unit 131 and notification unit 132. The terminal device 500 of the fourth embodiment is also different from the terminal device 100 of the first embodiment, in that the terminal device 500 further includes an accumulation storage unit 521, and a formula storage unit 522 in a storage unit 520.

The accumulation storage unit 521 of the terminal device 500 accumulates and stores the number of steps, the trembling number, and the time period received from the detection device 10. The accumulation storage unit 521 accumulates and stores, for example, the numbers of steps, the trembling numbers, and the time periods of each detection device 10 from start of the service provided by the motion detection system 4 to the present time. Because the accumulation storage unit 521 stores the contents similar to those of the analysis result storage unit 13 of the detection device 10 illustrated in FIG. 2 of the first embodiment, the detailed explanation thereof is omitted.

The formula storage unit 522 stores a calculation formula of a regression line and a definite formula indicating a threshold of the trembling number, which are calculated in the calculator 535.

The acquisition unit 531 acquires the number of steps, the trembling number, and the time period from the detection unit 10. When operation information instructing start of analysis based on the operation of the user is input from the display operation unit 112 to the acquisition unit 531, the acquisition unit 531 determines whether communication with the detection device 10 has been set for the first communication unit 110. When communication with the detection unit 10 has not been set, the acquisition unit 531 causes the display operation unit 112 to display a message to request the user to perform setting of communication between the detection device 10 and the terminal device 500, to perform setting of communication between the detection device 10 and the terminal device 500. The acquisition unit 531 outputs setting information of communication with the detection device 10 to the first communication unit 110. The detection device 10 is set to a searchable state by an operation of user. Thereafter, in the terminal device 500, a search operation is performed by an operation of a user, and the detection device 10 displayed as a connection party on the display operation unit 112 is selected. In this manner, the terminal device 500 is paired with the detection device 10, and enabled to communicate with the detection device 10.

When communication with the detection device 10 has been set or when the communication setting operation described above is finished, the acquisition unit 531 transmits a connection request to the detection device 10 through the first communication unit 110. The acquisition unit 531 receives the number of steps, the trembling number, and the time period corresponding to the connection request, from the detection device 10 through the first communication unit 110. The acquisition unit 531 stores the received number of steps, trembling number, and time period in the accumulation storage unit 521, and outputs determination request information to determine whether the time period includes a tremble probably related to the health condition to the determination unit 532.

When the determination unit 532 receives determination request information from the acquisition unit 531, the determination unit 532 determines whether a definite formula of a threshold to determine whether the time period includes a tremble probably related to the health condition exists. When no definite formula of the threshold exists, the determination unit 532 refers to the accumulation storage unit 521 to determine whether definite formula calculation data exists. When data for definite formula calculation exists, the determination unit 532 outputs calculation information to the calculator 535. When no data for definite formula calculation exists, the determination unit 532 outputs data lack information to the generator 533.

When the definite formula of the threshold exists, or when the definite formula is calculated by the calculator 535, the determination unit 532 refers to the formula storage unit 522, and determines whether the trembling number is equal to or larger than the threshold, based on the definite formula. When the trembling number is equal to or larger than the threshold, the determination unit 532 outputs determination information indicating that the trembling number is equal to or larger than the threshold to the generator 533. When the trembling number is less than the threshold, the determination unit 532 outputs determination information indicating that the trembling number is less than the threshold to the generator 533.

The generator 533 receives determination information or data lack information from the determination unit 532. When determination information is input from the determination unit 532 to the generator 533, the generator 533 generates notification information that the time period with a large trembling number exists, in case of determination information indicating that the trembling number is equal to or larger than the threshold. In addition, in case of determination information indicating that the trembling number is less than the threshold, the generator 533 generates notification information that no time period with large trembling number exists. When data lack information is input from the determination unit 532 to the generator 533, the generator 533 generates notification information that data accumulation is lacking. The generator 533 outputs the generated notification information to the display controller 534.

When the display controller 534 receives notification information from the generator 533, the display controller 534 generates a display picture to display the notification information, and causes the display operation unit 112 to display the generated display picture.

When the calculator 535 receives calculation information from the determination unit 532, the calculator 535 calculates a calculation formula of a regression line and a definite formula indicating the threshold of the trembling number, with reference to the accumulation storage unit 521. The calculator 535 stores the calculated calculation formula of the regression line and the definite formula indicating the threshold of the trembling number in the formula storage unit 522. Calculation of the calculation formula of the regression line and the definite formula indicating the threshold of the trembling number is the same as that performed by the calculator 235 of the first embodiment, and explanation thereof is omitted.

The following is explanation of operations of the motion detection system 4 of the fourth embodiment. Among processes executed by the detection device 10 and the terminal device 500 of the fourth embodiment, processes that are the same as those of the detection device 10 and the terminal device 100 of the first embodiment will be provided with the same step numbers, and explanation thereof is omitted.

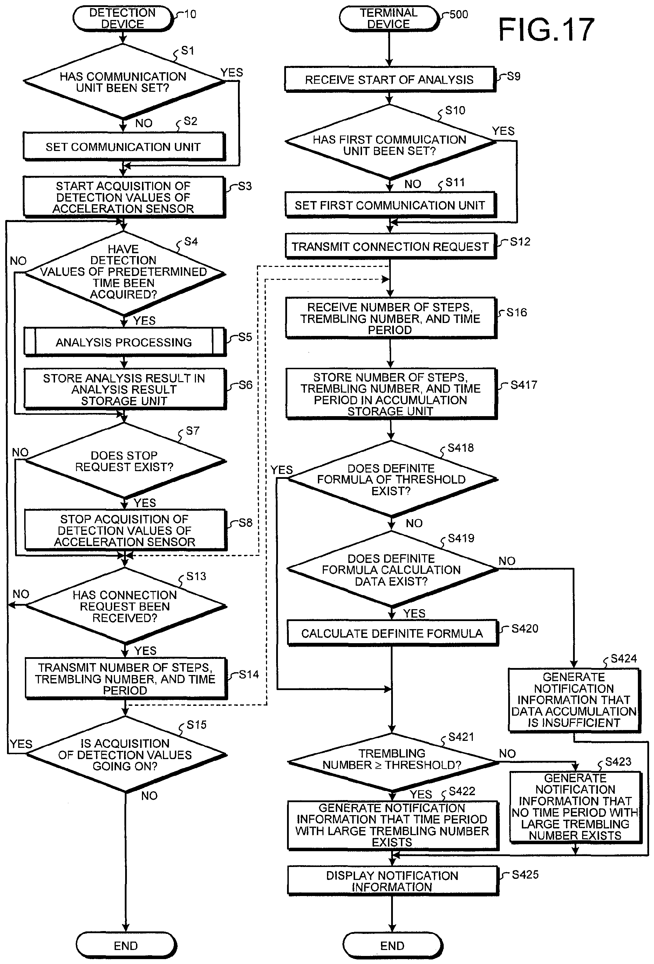

FIG. 17 is a sequence diagram illustrating an example of operations of the motion detection system of the fourth embodiment. The acquisition unit 531 of the terminal device 500 stores the received number of steps, trembling number, and time period in the accumulation storage unit 521 (Step S417). The acquisition unit 531 also outputs determination request information to the determination unit 532 to determine whether the time period includes a tremble probably related to the health condition.

When the determination unit 532 receives determination request information from the acquisition unit 531, the determination unit 532 determines whether any definite formula of the threshold exists (Step S418). When any definite formula of the threshold exists (Step S418: Yes), the determination unit 532 proceeds to Step S421. When no definite formula of the threshold exists (Step S418: No), the determination unit 532 determines whether any data for definite formula calculation exists, with reference to the accumulation storage unit 521 (Step S419). When any data for definite formula calculation exists (Step S419: Yes), the determination unit 532 outputs calculation information to the calculator 535.

When calculation information is input from the determination unit 532 to the calculator 535, the calculator 535 calculates calculation formula of the regression line and the definite formula indicating the threshold of the trembling number, with reference to the accumulation storage unit 521 (Step S420). The calculator 535 stores the calculated calculation formula of the regression line and the definite formula in the formula storage unit 522.

When the definite formula of the threshold exists (Step S418: Yes), or when a definite formula is calculated by the calculator 535 (Step S420), the determination unit 532 determines, based on the definite formula, whether the trembling number is equal to or larger than the threshold, with reference to the formula storage unit 522 (Step S421). When the trembling number is equal to or larger than the threshold (Step S421: Yes), the determination unit 532 outputs determination information indicating that the trembling number is equal to or larger than the threshold to the generator 533. When the trembling number is less than the threshold (Step S421: No), the determination unit 532 outputs determination information indicating that the trembling number is less than the threshold to the generator 533. When no data for definite formula calculation exists (Step S419: No), the determination unit 532 outputs data lack information to the generator 533.

The generator 533 receives determination information or data lack information from the determination unit 532. When determination information is input from the determination unit 532 to the generator 533, the generator 533 generates notification information that a time period with large trembling number exists (Step S422), in case of determination information indicating that the trembling number is equal to or larger than the threshold. In case of determination information indicating that the trembling number is less than the threshold, the generator 533 generates notification information that no period with large trembling number exists (Step S423). When data lack information is input from the determination unit 532 to the generator 533, the generator 533 generates notification information that data accumulation is lacking (Step S424). The generator 533 outputs the generated notification information to the display controller 534. When notification information is input from the generator 533 to the display controller 534, the display controller 534 generates a display picture to display the notification information, and causes the display operation unit 112 to display the generated display picture (Step S425).

In this manner, the terminal device 500 acquires the number of steps and the trembling number based on detection values of the acceleration sensor 14, and the time period at which the number of steps and the trembling number are detected, from the detection device 10. The terminal device 500 determines whether the trembling number occurring in the time period with the number of steps of the predetermined number or less exceeds a threshold, in the time period with the number of steps exceeding the predetermined number and the time period with the number of steps of the predetermined number or less. As a result of determination, when the trembling number exceeds the threshold, the terminal device 500 generates information based on the trembling number, and causes the display operation unit 112 to display the generated information. As a result, a tremble probably related to the health condition can be detected.

In each of the embodiments described above, the detection device 10, 20, or 30 is described as an attachment device to be attached to, for example, a collar or a harness of a dog, but the present invention is not limited thereto. For example, the detection device 10, 20, or 30 may be built in a collar or a harness. In this manner, the user can easily handle the device, and bothering the animal to which the device is attached can be suppressed.

In each of the embodiments described above, the detected health condition is displayed on the display operation unit 112 of the terminal device 100 or the like, but the present invention is not limited thereto. For example, the health condition may be notified with alarm sound or vibration corresponding to the health condition, or a mail or the like may be transmitted to another information processing device. In this manner, a notification method according to the preference of the user can be set.

In each of the embodiments described above, a tremble probably related to the health condition is detected based on detection values of the acceleration sensor 14, but the present invention is not limited thereto. For example, the detection device 10, 20, or 30 may be provided with a temperature sensor, to detect the body temperature or the ambient temperature of the target animal, as information related to the health condition together with detection values of the acceleration sensor 14. This structure enables recognition of the health condition in more detail.

In each of the embodiments described above, acquisition of the number of steps, the trembling number, and the time period is started after setting near field communication between the detection device 10 or the like and the terminal device 100 or the like, but the present invention is not limited thereto. For example, the detection device 10 alone or the like may start acquisition of the number of steps, the trembling number, and the time period, and near field communication may be set between the terminal device 100 or the like, the near field communication detection device 10 or the like, and the terminal device 100 or the like, at the time when a predetermined volume of data is accumulated in the detection device 10 or the like. This structure enables acquisition of data with the detection device 10 or the like, even when the battery of the terminal device 100 or the like drains.

In the fourth embodiment described above, determination is performed as to whether the trembling number occurring in the time period with the number of steps of the predetermined number or less exceeds the threshold, but the present invention is not limited thereto. For example, the second embodiment or 3 may be applied to determine whether the trembling number corresponding to the number of steps occurring in a time period in case where the positional information falls within a predetermined range or where communication information indicates a communication possible state exceeds the threshold. In this manner, a tremble probably related to the health condition can be easily detected according to various conditions.

Constituent elements of the illustrated units are not necessarily physically configured as illustrated. Specifically, specific forms of distribution and integration of the units are not limited to those illustrated, but may be configured to be functionally or physically distributed or integrated in desired units.

Each of the embodiments related to the disclosed system has been explained above. The following is explanation of an example of hardware configuration of the detection device and the terminal device of each of the embodiments. All or desired part of various processing functions executed in the devices may be executed on a CPU (or a microcomputer such as an MPU and a micro controller unit (MCU)). All or desired part of the various processing functions may be executed on a program analyzed and executed by the CPU (or a microcomputer such as an MPU or an MCU), or on hardware by a wired logic, as a matter of course. The various processes explained in each of the embodiments described above can be achieved by executing a prepared program with a computer. The following is explanation of an example of a computer executing a program having the same functions as those of each of the embodiments described above, as an example of hardware configuration.

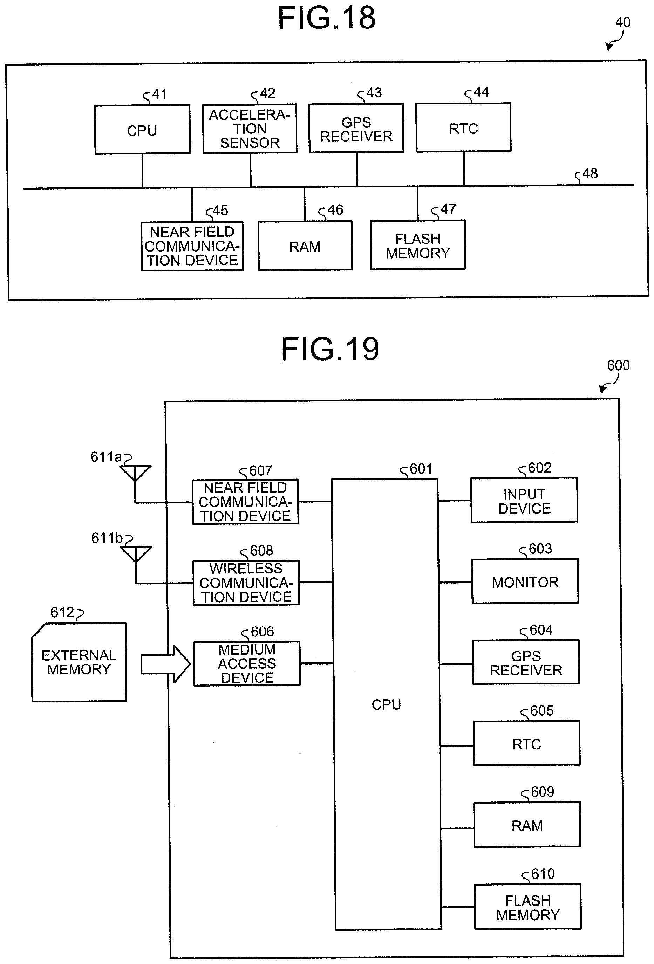

FIG. 18 is a diagram illustrating an example of hardware configuration of the detection device. As illustrated in FIG. 18, the detection device 40 includes a CPU 41 executing various arithmetic processing, an acceleration sensor 42, a GPS receiver 43 measuring the position, and a real time clock (RTC) 44 outputting the time. The detection device 40 also includes a near field communication device 45 communicating with the terminal device, a RAM 46 temporarily storing various pieces of information, and a flash memory 47. Each of the devices 41 to 47 is connected to a bus 48.

The flash memory 47 stores programs having the same functions as those of processing units of the acquisition unit 16, 26, or 36, and the analyzer 17 illustrated in the embodiments described above. The flash memory 47 also stores various types of data to achieve the analysis result storage unit 13 and the programs.

The CPU 41 reads the programs stored in the flash memory 47, and expands and executes the programs in the RAM 46, to perform various types of processes. These programs may cause the detection device 40 to function as the acquisition unit 16, 26, or 36, and the analyzer 17 illustrated in the embodiments described above. The programs described above are not necessarily stored in the flash memory 47. For example, the detection device 40 may read and execute programs stored in a storage medium readable by the detection device 40.

FIG. 19 is a diagram illustrating an example of hardware configuration of the terminal device. As illustrated in FIG. 19, a terminal device 600 includes a CPU 601 executing various arithmetic processing, an input device 602, a monitor 603, and a GPS receiver 604 measuring the position. The terminal device 600 also includes an RTC 605 that outputs the time, and a medium access device 606 reading programs or the like from the storage medium, and writing data or the like to the storage medium. The terminal device 600 also includes a near field communication device 607 communicating with the detection device, a wireless communication device 608 to connect with the server device or the like in a wireless manner, and antennas 611 a and 611 b. The terminal device 600 also includes a RAM 609 temporarily storing various types of information, and a flash memory 610. Each of the devices 602 to 610 is connected with the CPU 601.

The flash memory 610 stores programs having the same functions as those of the processing units of the acquisition unit 131, 331, or 431 illustrated in the embodiments described above, the notification unit 132, and the extraction unit 333 or 433. The flash memory 610 also stores various types of data to achieve the programs. Otherwise, the flash memory 610 stores programs having the same functions as those of the processing units of the acquisition unit 531, the determination unit 532, the generator 533, the display controller 534, and the calculator 535. The flash memory 610 also stores various types of data to achieve the accumulation storage unit 521, the formula storage unit 522, and the programs. The medium access device 606 reads and writes various types of applications and data from and to an external memory 612.

The CPU 601 reads the programs stored in the flash memory 610, and expands and executes the programs in the RAM 609, to perform various types of processes. These programs may cause the terminal device 600 to function as the acquisition unit 131, 331, or 431, the notification unit 132, and the extraction unit 333 or 433 illustrated in the embodiments described above. Otherwise, the programs may cause the terminal device 600 to function as the acquisition unit 531, the determination unit 532, the generator 533, the display controller 534, and the calculator 535. The programs described above are not necessarily stored in the flash memory 610. For example, the detection device 600 may read and execute programs stored in a storage medium readable by the detection device 600.

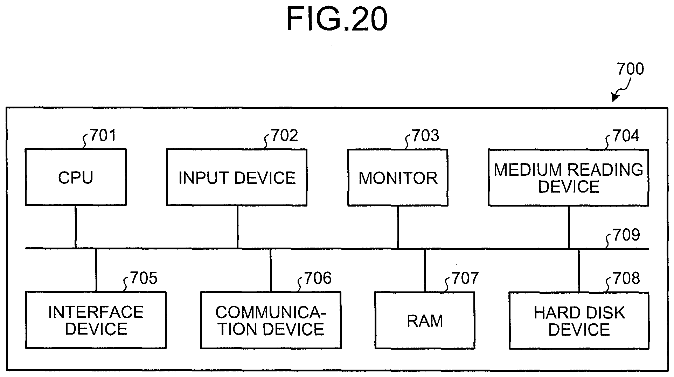

FIG. 20 is a diagram illustrating an example of a computer executing a motion detection program. As illustrated in FIG. 20, a computer 700 includes a CPU 701 executing various arithmetic processes, an input device 702, and a monitor 703. The computer 700 also includes a medium reading device 704 reading programs or the like from the storage medium, an interface device 705 to connect with another device, and a communication device 706 to connect with the terminal device in a wired or wireless manner. The computer 700 also includes a RAM 707 temporarily storing various types of information, and a hard disk device 708. Each of the devices 701 to 708 are connected to a bus 709. The computer 700 is, for example, a server device.

The hard disk device 708 stores a motion detection program having the same functions as those of processing units of the acquisition unit 231, the determination unit 232, the generator 233, the notification unit 234, and the calculator 235 illustrated in the embodiments described above. The hard disk device 708 also stores the accumulation storage unit 221 and the formula storage unit 222. The hard disk device 708 also stores various types of data to achieve the motion detection program.

The CPU 701 reads the programs stored in the hard disk device 708, and expands and executes the programs in the RAM 707, to perform various types of processes. These programs may cause the computer 700 to function as the acquisition unit 231, the determination unit 232, the generator 233, the notification unit 234, and the calculator 235 illustrated in the embodiments described above.

The programs described above are not necessarily stored in the hard disk device 708. For example, the computer 700 may read and execute programs stored in a storage medium readable by the computer 700. The storage medium readable by the computer 700 corresponds to, for example, a portable recording medium such as a CD-ROM, a DVD disk, a universal serial bus (USB) memory, a semiconductor memory such as a flash memory, and a hard disk drive. The motion detection program may be stored in a device connected to, for example, a public line, the Internet, or a local area network (LAN), to be read therefrom and executed by the computer 700.

[Explanation of Reference]

| | |
|---|---|
| 1, 2, 3, 4 | MOTION DETECTION SYSTEM |
| 10, 20, 30 | DETECTION DEVICE |
| 11 | COMMUNICATION UNIT |
| 12 | STORAGE UNIT |
| 13, 23, 33 | ANALYSIS RESULT STORAGE UNIT |
| 14 | ACCELERATION SENSOR |
| 15, 25, 35 | CONTROLLER |
| 16, 26, 36 | ACQUISITION UNIT |
| 17 | ANALYZER |
| 28 | POSITIONING UNIT |
| 100, 300, 400 | TERMINAL DEVICE |
| 110 | FIRST COMMUNICATION UNIT |
| 111 | SECOND COMMUNICATION UNIT |
| 112 | DISPLAY OPERATION UNIT |
| 130, 330, 430 | CONTROLLER |
| 131, 331, 431 | ACQUISITION UNIT |

| 132 | NOTIFICATION UNIT |
|---|---|
| 200 | SERVER DEVICE |
| 210 | COMMUNICATION UNIT |
| 220 | STORAGE UNIT |
| 221 | ACCUMULATION STORAGE UNIT |
| 222 | FORMULA STORAGE UNIT |
| 230 | CONTROLLER |
| 231 | ACQUISITION UNIT |
| 232 | DETERMINATION UNIT |
| 233 | GENERATOR |
| 234 | NOTIFICATION UNIT |
| 235 | CALCULATOR |
| 313 | POSITIONING UNIT |
| 333,433 | EXTRACTION UNIT |
| 500 | TERMINAL DEVICE |
| 520 | STORAGE UNIT |
| 521 | ACCUMULATION STORAGE UNIT |
| 522 | FORMULA STORAGE UNIT |
| 530 | CONTROLLER |
| 531 | ACQUISITION UNIT |
| 532 | DETERMINATION UNIT |
| 533 | GENERATOR |
| 534 | DISPLAY CONTROLLER |
| 535 | CALCULATOR |

**Claims**

1. A motion detection method comprising executing, with a computer:

   acquiring, from a terminal device, number of steps and a trembling number based on detection values of an acceleration sensor, and a time period in which the number of steps and the trembling number are detected;
   determining whether the trembling number occurring in a time period with the number of steps of a predetermined number or less exceeds a threshold, out of a time period with the number of steps exceeding the predetermined number, and the time period with the number of steps of the predetermined number or less;
   generating information based on the trembling number when the trembling number exceeds the threshold as a result of the determining; and
   notifying the terminal device of the generated information.

2. The motion detection method according to claim 1, wherein the determining includes determining whether the trembling number occurring in the time period with the number of steps of the predetermined number or less exceeds the threshold corresponding to a regression line, based on the regression line based on the number of steps and the trembling number for a predetermined period of time.

3. The motion detection method according to claim 1, wherein the acquiring includes acquiring, from the terminal device, the number of steps and the trembling number based on detection values for each predetermined time, and a time period in which the number of steps and the trembling number are detected.

4. The motion detection method according to claim 1, wherein the acquiring includes acquiring, as the number of steps, number of steps based on detection values of the acceleration sensor corresponding to a vertical direction when the detection values of the acceleration sensor have periodicity, and acquiring, as the trembling number, a trembling number with a total sum of differences in magnitudes of vectors of the detection values of the acceleration sensor equal to or larger than a predetermined value when the detection values of the acceleration sensor have no periodicity.

5. The motion detection method according to claim 1, wherein the acquiring includes receiving, with the terminal device, the number of steps and the trembling number, and the time period in which the number of steps and the trembling number are detected, from a detection device attached to an animal, and acquiring the received number of steps and trembling number, and time period in which the number of steps and the trembling number are detected, from the terminal device.

6. The motion detection method according to claim 1, further including calculating a regression line based on the number of steps and the trembling number for a predetermined period of time and the threshold corresponding to the regression line, based on the number of steps and the trembling number, and the time period in which the number of steps and the trembling number are detected, the number of steps, the trembling number, and the time period being acquired from the terminal device.

7. A motion detection method comprising executing, with a computer:

   acquiring, from a terminal device, number of steps and a trembling number based on detection values of an acceleration sensor, a time period in which the number of steps and the trembling number are detected, and positional information;
   determining whether the trembling number corresponding to the number of steps occurring in the time period when the positional information falls within a predetermined range from the terminal device exceeds a threshold;
   generating information based on the trembling number when the trembling number exceeds the threshold as a result of the determining; and
   notifying the terminal device of the generated information.

8. A motion detection method comprising executing, with a computer:

   acquiring, from a terminal device, number of steps and a trembling number based on detection values of an acceleration sensor, a time period in which the number of steps and the trembling number are detected, and a connection state of communication;
   determining whether the trembling number corresponding to the number of steps occurring in the time period when the connection state of communication is a communication possible state exceeds a threshold;
   generating information based on the trembling number when the trembling number exceeds the threshold as a result of the determining; and
   notifying the terminal device of the generated information.

9. A motion detection program that causes a computer to execute a process comprising:

   acquiring, from a terminal device, number of steps and a trembling number based on detection values of an acceleration sensor, and a time period in which the number of steps and the trembling number are detected;
   determining whether the trembling number occurring in a time period with the number of steps of a predetermined number or less exceeds a threshold, out of a time period with the number of steps exceeding the predetermined number, and the time period with the number of steps of the predetermined number or less;
   generating information based on the trembling number when the trembling number exceeds the threshold as a result of the determining; and
   causing a display unit to display the generated information.

10. A terminal device comprising:

   an acquisition unit configured to acquire, from a terminal device, number of steps and a trembling number based on detection values of an acceleration sensor, and a time period in which the number of steps and the trembling number are detected;
   a determination unit configured to determine whether the trembling number occurring in a time period with the number of steps of a predetermined number or less exceeds a threshold, out of a time period with the number of steps exceeding the predetermined number, and the time period with the number of steps of the predetermined number or less;
   a generator configured to generate information based on the trembling number when the trembling number exceeds the threshold as a result of the determining; and
   a display controller configured to cause a display unit to display the generated information.

11. A motion detection program that causes a computer to execute a process comprising:

   acquiring, from a terminal device, number of steps and a trembling number based on detection values of an acceleration sensor, a time period in which the number of steps and the trembling number are detected, and positional information;
determining whether the trembling number corresponding to the number of steps occurring in the time period when the positional information falls within a predetermined range from the computer exceeds a threshold;
generating information based on the trembling number when the trembling number exceeds the threshold as a result of the determining; and
causing a display unit to display the generated information.

12. A terminal device comprising:

an acquisition unit configured to acquire, from a detection device, number of steps and a trembling number based on detection values of an acceleration sensor, a time period in which the number of steps and the trembling number are detected, and positional information;
a determination unit configured to determine whether the trembling number corresponding to the number of steps occurring in the time period when the positional information falls within a predetermined range from the terminal device exceeds a threshold;
a generator configured to generate information based on the trembling number when the trembling number exceeds the threshold as a result of the determining; and
a display controller configured to cause a display unit to display the generated information.

13. A motion detection program that causes a computer to execute a process comprising:

acquiring, from a detection device, number of steps and a trembling number based on detection values of an acceleration sensor, and a time period in which the number of steps and the trembling number are detected;
determining whether the trembling number corresponding to the number of steps occurring in the time period when a connection state of a communication unit communicating with the detection device is a communication possible state exceeds a threshold;
generating information based on the trembling number when the trembling number exceeds the threshold as a result of the determining; and
causing a display unit to display the generated information.

14. A terminal device comprising:

an acquisition unit configured to acquire, from a detection device, number of steps and a trembling number based on detection values of an acceleration sensor, and a time period in which the number of steps and the trembling number are detected;
a determination unit configured to determine whether the trembling number corresponding to the number of steps occurring in the time period when a connection state of a communication unit communicating with the detection device is a communication possible state exceeds a threshold;
a generator configured to generate information based on the trembling number when the trembling number exceeds the threshold as a result of the determining; and
a display controller configured to cause a display unit to display the generated information.

# FIG.1

# FIG.2

13

| TIME PERIOD | NUMBER OF STEPS | TREMBLING NUMBER | TRANSMISSION DATE AND TIME | ... |
|---|---|---|---|---|
| 09:00 TO 09:10 | 238 | 0 | 2014/6/17,09:35 | ... |
| 09:10 TO 09:20 | 164 | 1 | 2014/6/17,09:35 | ... |
| ... | ... | ... | | ... |
| 10:10 TO 10:20 | 139 | 4 | | ... |
| ... | ... | ... | ... | ... |

# FIG.3

100

TREM-BLE — 51

112

2014/4/6 13:20 — 52

# FIG.4

100

TREM-BLE ─51

DETAILED INFORMATION OF
TREMBLING NUMBER ─112

2014/4/6 13:00 TO 13:10
NUMBER OF STEPS 123
TREMBLING NUMBER 15
(AVERAGE TREMBLING NUMBER
PER 10 MINUTES FOR 101 TO 200
STEPS IS 5) ─53

# FIG.5

100

─112

52
2014/4/6 13:20

## FIG.6

## FIG.7

FIG.8

DETECTION DEVICE 10

S1 HAS COMMUNICATION UNIT BEEN SET? — YES
NO
S2 SET COMMUNICATION UNIT
S3 START ACQUISITION OF DETECTION VALUES OF ACCELERATION SENSOR
S4 HAVE DETECTION VALUES OF PREDETERMINED TIME BEEN ACQUIRED? — NO
YES
S5 ANALYSIS PROCESSING
S6 STORE ANALYSIS RESULT IN ANALYSIS RESULT STORAGE UNIT
S7 DOES STOP REQUEST EXIST? — NO
YES
S8 STOP ACQUISITION OF DETECTION VALUES OF ACCELERATION SENSOR
S13 HAS CONNECTION REQUEST BEEN RECEIVED? — NO
YES
S14 TRANSMIT NUMBER OF STEPS, TREMBLING NUMBER, AND TIME PERIOD
S15 IS ACQUISITION OF DETECTION VALUES GOING ON? — YES
NO
END

TERMINAL DEVICE 100

S9 RECEIVE START OF ANALYSIS
S10 HAS FIRST COMMUICATION UNIT BEEN SET? — YES
NO
S11 SET FIRST COMMUNICATION UNIT
S12 TRANSMIT CONNECTION REQUEST
S16 RECEIVE NUMBER OF STEPS, TREMBLING NUMBER, AND TIME PERIOD
S17 STORE NUMBER OF STEPS, TREMBLING NUMBER, AND TIME PERIOD IN STORAGE UNIT
S18 TRANSMIT NUMBER OF STEPS, TREMBLING NUMBER, AND TIME PERIOD
S29 RECEIVE NOTIFICATION INFORMATION
S30 DISPLAY RECEIVED NOTIFICATION INFORMATION
END

SERVER DEVICE 200

S19 RECEIVE NUMBER OF STEPS, TREMBLING NUMBER, AND TIME PERIOD
S20 STORE NUMBER OF STEPS, TREMBLING NUMBER, AND TIME PERIOD IN ACCUMULATION STORAGE UNIT
S21 DOES DEFINITE FORMULA OF THRESHOLD EXIST? — YES
NO
S22 DOES DEFINITE FORMULA CALCULATION DATA EXIST? — NO
YES
S23 CALCULATE DEFINITE FORMULA
S24 TREMBLING ≥ NUMBERTHRESHOLD? — NO
YES
S25 GENERATE NOTIFICATION INFORMATION THAT TIME PERIOD WITH LARGE TREMBLING NUMBER EXISTS
S26 GENERATE NOTIFICATION INFORMATION THAT NO TIME PERIOD WITH LARGE TREMBLING NUMBER EXISTS
S27 GENERATE NOTIFICATION INFORMATION THAT DATA ACCUMULATION IS INSUFFICIENT
S28 TRANSMIT NOTIFICATION INFORMATION
END

EP 3 168 821 A1

FIG.9

```
                    ┌─────────────────┐
                    │    ANALYSIS     │
                    │   PROCESSING    │
                    └─────────────────┘
                             │
                             ▼
                          ╱╲  S51
                        ╱      ╲
                      ╱   DO     ╲
                    ╱  DETECTION   ╲
                  ╱ VALUES WITHIN    ╲  NO
                 ◄ PREDETERMINED PERIOD ►──────────┐
                  ╲  OF TIME HAVE     ╱             │
                    ╲ PERIODICITY?  ╱               │
                      ╲          ╱                  │
                        ╲      ╱                    │
                          ╲╱                        │
                          │ YES                     │
                          ▼       S52               │
              ┌───────────────────────────┐         │
              │ CALCULATE NUMBER OF STEPS │         │
              └───────────────────────────┘         │
                          │                         │
                          ▼                         │
                        ╱╲  S53                      │
                      ╱      ╲                       │
                    ╱   DOES   ╲                     │
                  ╱   PERIOD WITHOUT ╲               │
                ╱   PERIODICITY INCLUDE ╲            │
          NO  ╱  PERIOD IN WHICH TOTAL SUM╲          │
         ◄───◄   OF DIFFERENCES IS EQUAL    ►        │
              ╲  TO OR LARGER THAN        ╱          │
                ╲  PREDETERMINED        ╱            │
                  ╲   VALUE?          ╱              │
                    ╲              ╱                 │
                      ╲          ╱                   │
                        ╲╱                           │
              │          │ YES      S54              │
              │          ▼                           │
              │ ┌───────────────────────┐            │
              │ │  CALCULATE TREMBLING  │            │
              │ │       NUMBER          │            │
              │ └───────────────────────┘            │
              │          │                           │
       S55    ▼          │                           ▼
  ┌─────────────────┐    │                         ╱╲  S56
  │  SET TREMBLING  │    │                       ╱      ╲
  │  NUMBER TO 0    │    │                     ╱   DOES   ╲
  └─────────────────┘    │                   ╱  PERIOD IN   ╲
              │          │                 ╱   WHICH TOTAL    ╲
              │          │               ╱  SUM OF DIFFERENCES ╲  NO
              │          │              ◄ BETWEEN MAGNITUDES OF ►────┐
              │          │               ╲ VECTORS OF DETECTION ╱    │
              │          │                ╲ VALUES IS EQUAL TO ╱     ▼   S58
              │          │                 ╲  OR LARGER THAN ╱    ┌──────────────┐
              │          │                  ╲ PREDETERMINED ╱     │ SET TREMBLING│
              │          │                   ╲   VALUE    ╱       │ NUMBER TO 0  │
              │          │                    ╲  EXIST? ╱         └──────────────┘
              │          │                      ╲    ╱                  │
              │          │                        ╲╱                    │
              │          │                        │ YES   S57           │
              │          │                        ▼                     │
              │          │            ┌───────────────────────┐         │
              │          │            │ CALCULATE TREMBLING   │         │
              │          │            │      NUMBER           │         │
              │          │            └───────────────────────┘         │
              │          │                        │                     │
              │          └────────────┬───────────┴─────────────────────┘
              └───────────────────────┤
                                      ▼
                              ┌───────────────┐
                              │      END      │
                              └───────────────┘
```

30

# FIG.10

# FIG.11

| TIME PERIOD | NUM-BER OF STEPS | TREMBLING NUMBER | POSITIONAL INFORMATION | TRANSMISSION DATE AND TIME | ... |
|---|---|---|---|---|---|
| 09:00 TO 09:10 | 238 | 0 | 35°67′ 54″ 26,139°75′ 65″ 65 | 2014/6/17,09:35 | ... |
| 09:10 TO 09:20 | 164 | 1 | 35°67′ 54″ 21,139°75′ 65″ 63 | 2014/6/17,09:35 | ... |
| ... | ... | ... | ... | ... | ... |
| 10:10 TO 10:20 | 139 | 4 | 35°67′ 54″ 27,139°75′ 65″ 68 | | ... |
| ... | ... | ... | ... | ... | ... |

# FIG.12

**SERVER DEVICE** (200)

- S19: RECEIVE NUMBER OF STEPS, TREMBLING NUMBER, AND TIME PERIOD
- S20: STORE NUMBER OF STEPS, TREMBLING NUMBER, AND TIME PERIOD IN ACCUMULATION STORAGE UNIT
- S21: DOES DEFINITE FORMULA OF THRESHOLD EXIST? — YES / NO
- S22: DOES DEFINITE FORMULA CALCULATION DATA EXIST? — YES / NO
- S23: CALCULATE DEFINITE FORMULA
- S24: TREMBLING NUMBER ≥ THRESHOLD? — YES / NO
- S25: GENERATE NOTIFICATION INFORMATION THAT TIME PERIOD WITH LARGE TREMBLING NUMBER EXISTS
- S26: GENERATE NOTIFICATION INFORMATION THAT NO TIME PERIOD WITH LARGE TREMBLING NUMBER EXISTS
- S27: GENERATE NOTIFICATION INFORMATION THAT DATA ACCUMULATION IS INSUFFICIENT
- S28: TRANSMIT NOTIFICATION INFORMATION
- END

**TERMINAL DEVICE** (300)

- S9: RECEIVE START OF ANALYSIS
- S10: HAS FIRST COMMUNICATION UNIT BEEN SET? — YES / NO
- S11: SET FIRST COMMUNICATION UNIT
- S12: TRANSMIT CONNECTION REQUEST
- S116: RECEIVE NUMBER OF STEPS, TREMBLING NUMBER, TIME PERIOD, AND POSITIONAL INFORMATION
- S117: STORE NUMBER OF STEPS, TREMBLING NUMBER, TIME PERIOD, AND POSITIONAL INFORMATION IN STORAGE UNIT
- S118: EXTRACT NUMBER OF STEPS, TREMBLING NUMBER, AND TIME PERIOD WITHIN PREDETERMINED RANGE FROM REGISTRATION POSITION
- S119: TRANSMIT EXTRACTED NUMBER OF STEPS, TREMBLING NUMBER, AND TIME PERIOD
- S29: RECEIVE NOTIFICATION INFORMATION
- S30: DISPLAY RECEIVED NOTIFICATION INFORMATION
- END

**DETECTION DEVICE** (20)

- S1: HAS COMMUNICATION UNIT BEEN SET? — YES / NO
- S2: SET COMMUNICATION UNIT
- S103: START ACQUISITION OF DETECTION VALUES OF ACCELERATION SENSOR AND POSITIONAL INFORMATION
- S4: HAVE DETECTION VALUES OF PREDETERMINED TIME BEEN ACQUIRED? — YES / NO
- S5: ANALYSIS PROCESSING
- S106: STORE ANALYSIS RESULT IN ANALYSIS RESULT STORAGE UNIT TOGETHER WITH POSITIONAL INFORMATION
- S107: DOES STOP REQUEST EXIST? — YES / NO
- S108: STOP ACQUISITION OF DETECTION VALUES OF ACCELERATION SENSOR AND POSITIONAL INFORMATION
- S13: HAS CONNECTION REQUEST BEEN RECEIVED? — YES / NO
- S114: TRANSMIT NUMBER OF STEPS, TREMBLING NUMBER, TIME PERIOD, AND POSITIONAL INFORMATION
- S15: IS ACQUISITION OF DETECTION VALUES GOING ON? — YES / NO
- END

33

# FIG.13

EP 3 168 821 A1

# FIG.14

EP 3 168 821 A1

33

| TIME PERIOD | NUMBER OF STEPS | TREMBLING NUMBER | COMMUNICATION INFORMATION | TRANSMISSION DATE AND TIME | . . . |
|---|---|---|---|---|---|
| 09:00 TO 09:10 | 238 | 0 | COMMUNICATION POSSIBLE | 2014/6/17,09:10 | . . . |
| 09:10 TO 09:20 | 164 | 1 | COMMUNICATION POSSIBLE | 2014/6/17,09:20 | . . . |
| . . . | . . . | . . . | . . . | . . . | . . . |
| 10:10 TO 10:20 | 139 | 4 | COMMUNICATION IMPOSSIBLE | | . . . |
| . . . | . . . | . . . | . . . | . . . | . . . |

# FIG.15

EP 3 168 821 A1

**DETECTION DEVICE** 30

- S1: HAS COMMUNICATION UNIT BEEN SET? — YES →
- NO ↓ S2: SET COMMUNICATION UNIT
- S203: START ACQUISITION OF DETECTION VALUES OF ACCELERATION SENSOR AND COMMUNICATION INFORMATION
- S4: HAVE DETECTION VALUES OF PREDETERMINED TIME BEEN ACQUIRED? — NO (loop back)
- YES ↓ S5: ANALYSIS PROCESSING
- STORE ANALYSIS RESULT IN ANALYSIS RESULT STORAGE UNIT TOGETHER WITH COMMUNICATION INFORMATION
- S207 / S206: DOES STOP REQUEST EXIST? — NO (loop back)
- YES ↓ S208: STOP ACQUISITION OF DETECTION VALUES OF ACCELERATION SENSOR AND COMMUNICATION INFORMATION
- S13: HAS CONNECTION REQUEST BEEN RECEIVED? — NO (loop back)
- YES ↓ S214: TRANSMIT NUMBER OF STEPS, TREMBLING NUMBER, TIME PERIOD, AND COMMUNICATION INFORMATION
- S15: IS ACQUISITION OF DETECTION VALUES GOING ON? — YES (loop back)
- NO ↓ END

**TERMINAL DEVICE** 400

- S9: RECEIVE START OF ANALYSIS
- S10: HAS FIRST COMMUNICATION UNIT BEEN SET? — YES →
- NO ↓ S11: SET FIRST COMMUNICATION UNIT
- S12: TRANSMIT CONNECTION REQUEST
- S216: RECEIVE NUMBER OF STEPS, TREMBLING NUMBER, TIME PERIOD, AND COMMUNICATION INFORMATION
- S217: STORE NUMBER OF STEPS, TREMBLING NUMBER, TIME PERIOD, AND COMMUNICATION INFORMATION IN STORAGE UNIT
- S218: EXTRACT NUMBER OF STEPS, TREMBLING NUMBER, AND TIME PERIOD WITH COMMUNICATION INFORMATION INDICATING COMMUNICATION POSSIBLE STATE
- S219: TRANSMIT EXTRACTED NUMBER OF STEPS, TREMBLING NUMBER, AND TIME PERIOD
- S29: RECEIVE NOTIFICATION INFORMATION
- S30: DISPLAY RECEIVED NOTIFICATION INFORMATION
- END

**SERVER DEVICE** 200

- S19: RECEIVE NUMBER OF STEPS, TREMBLING NUMBER, AND TIME PERIOD
- S20: STORE NUMBER OF STEPS, TREMBLING NUMBER, AND TIME PERIOD IN ACCUMULATION STORAGE UNIT
- S21: DOES DEFINITE FORMULA OF THRESHOLD EXIST? — YES (loop back to top)
- NO ↓ S22: DOES DEFINITE FORMULA CALCULATION DATA EXIST? — NO →
- YES ↓ S23: CALCULATE DEFINITE FORMULA
- S24: TREMBLING NUMBER ≥ THRESHOLD? — NO →
- YES ↓ S25: GENERATE NOTIFICATION INFORMATION THAT TIME PERIOD WITH LARGE TREMBLING NUMBER EXISTS
- S26: GENERATE NOTIFICATION INFORMATION THAT NO TIME PERIOD WITH LARGE TREMBLING NUMBER EXISTS
- S27: GENERATE NOTIFICATION INFORMATION THAT DATA ACCUMULATION IS INSUFFICIENT
- S28: TRANSMIT NOTIFICATION INFORMATION
- END

# FIG.16

FIG.17

**Detection Device (10):**

DETECTION DEVICE 10

S1 — HAS COMMUNICATION UNIT BEEN SET? — YES →
NO ↓

S2 — SET COMMUNICATION UNIT

S3 — START ACQUISITION OF DETECTION VALUES OF ACCELERATION SENSOR

S4 — HAVE DETECTION VALUES OF PREDETERMINED TIME BEEN ACQUIRED? — NO
YES ↓

S5 — ANALYSIS PROCESSING

S6 — STORE ANALYSIS RESULT IN ANALYSIS RESULT STORAGE UNIT

S7 — DOES STOP REQUEST EXIST? — NO
YES ↓

S8 — STOP ACQUISITION OF DETECTION VALUES OF ACCELERATION SENSOR

S13 — HAS CONNECTION REQUEST BEEN RECEIVED? — NO
YES ↓

S14 — TRANSMIT NUMBER OF STEPS, TREMBLING NUMBER, AND TIME PERIOD

S15 — IS ACQUISITION OF DETECTION VALUES GOING ON? — YES
NO ↓

END

**Terminal Device (500):**

TERMINAL DEVICE 500

S9 — RECEIVE START OF ANALYSIS

S10 — HAS FIRST COMMUICATION UNIT BEEN SET? — YES →
NO ↓

S11 — SET FIRST COMMUNICATION UNIT

S12 — TRANSMIT CONNECTION REQUEST

S16 — RECEIVE NUMBER OF STEPS, TREMBLING NUMBER, AND TIME PERIOD

S417 — STORE NUMBER OF STEPS, TREMBLING NUMBER, AND TIME PERIOD IN ACCUMULATION STORAGE UNIT

S418 — DOES DEFINITE FORMULA OF THRESHOLD EXIST? — YES
NO ↓

S419 — DOES DEFINITE FORMULA CALCULATION DATA EXIST? — NO →
YES ↓

S420 — CALCULATE DEFINITE FORMULA

S424 — GENERATE NOTIFICATION INFORMATION THAT DATA ACCUMULATION IS INSUFFICIENT

S421 — TREMBLING NUMBER ≥ THRESHOLD? — NO →
YES ↓

S422 — GENERATE NOTIFICATION INFORMATION THAT TIME PERIOD WITH LARGE TREMBLING NUMBER EXISTS

S423 — GENERATE NOTIFICATION INFORMATION THAT NO TIME PERIOD WITH LARGE TREMBLING NUMBER EXISTS

S425 — DISPLAY NOTIFICATION INFORMATION

END

# FIG.18

# FIG.19

# FIG.20

700

| 701 | 702 | 703 | 704 |
|-----|-----|-----|-----|
| CPU | INPUT DEVICE | MONITOR | MEDIUM READING DEVICE |

709

| 705 | 706 | 707 | 708 |
|-----|-----|-----|-----|
| INTERFACE DEVICE | COMMUNICA-TION DEVICE | RAM | HARD DISK DEVICE |

## INTERNATIONAL SEARCH REPORT

| International application No. |
| --- |
| PCT/JP2014/068096 |

A. CLASSIFICATION OF SUBJECT MATTER
*G08B21/18(2006.01)i*

According to International Patent Classification (IPC) or to both national classification and IPC

B. FIELDS SEARCHED

Minimum documentation searched (classification system followed by classification symbols)
G08B21/18

Documentation searched other than minimum documentation to the extent that such documents are included in the fields searched
Jitsuyo Shinan Koho      1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2010-68268 A  (Wacom-IT Co., Ltd.),<br>25 March 2010 (25.03.2010),<br>paragraphs [0037] to [0064], [0087] to [0104];<br>fig. 1 to 6<br>(Family: none) | 1,3-5,7-14<br>2,6 |
| Y<br>A | JP 2013-109623 A  (Casio Computer Co., Ltd.),<br>06 June 2013 (06.06.2013),<br>paragraphs [0004] to [0005], [0009], [0018] to<br>[0026], [0038] to [0044]; fig. 1 to 7, 10<br>(Family: none) | 1,3-5,7-14<br>2,6 |
| A | JP 2013-77113 A  (Casio Computer Co., Ltd.),<br>25 April 2013 (25.04.2013),<br>paragraphs [0011] to [0049]; fig. 1 to 9<br>(Family: none) | 1-14 |

☒  Further documents are listed in the continuation of Box C.        ☐   See patent family annex.

| | |
| --- | --- |
| *    Special categories of cited documents:<br>"A"  document defining the general state of the art which is not considered    to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>      19 September, 2014 (19.09.14) | Date of mailing of the international search report<br>      30 September, 2014 (30.09.14) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/068096

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-296097 A  (Toshiba Corp.),<br>17 December 2009 (17.12.2009),<br>paragraphs [0004] to [0059]; fig. 1 to 8<br>& US 2009/0299691 A1 | 1-14 |
| A | JP 2006-293861 A  (Matsushita Electric Works, Ltd.),<br>26 October 2006 (26.10.2006),<br>paragraphs [0004] to [0024]; fig. 1 to 2<br>(Family: none) | 1-14 |

Form PCT/ISA/210 (continuation of second sheet) (July 2009)

**EP 3 168 821 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013077113 A

- JP 2010068268 A